# FASCICULE DE BREVET EUROPEEN

(11) **EP 3 136 758 B1**
(45) Date de publication et mention de la délivrance du brevet: **09.12.2020**
(21) Numéro de dépôt: 16185952.5
(22) Date de dépôt: 26.08.2016
(51) Int. Cl.: H04W 4/14, H04W 4/02

(54) **PROCÉDÉ ET SYSTÈME DE MISE EN RELATION SOCIALE ANONYME ET SÉCURISÉE LORS D'UN ÉVÉNEMENT**
SYSTEME UND VERFAHREN ZUR GESICHERTEN UND ANONYMEN SOZIALEN ABBILDUNG WÄHREND EINES ERREIGNISSES
METHOD AND SYSTEM FOR ANONYMOUS AND SECURE SOCIAL MAPPING DURING AN EVENT

(30) Priorité: 28.08.2015 FR 1558012
(43) Date de publication de la demande: 01.03.2017
(73) Titulaire: ORANGE, 75015 Paris (FR)
(72) Inventeur: KIRSCHBAUM, Patrick, 78125 Poigny la Foret (FR); BRUN, Arnaud, 92100 Boulogne Billancourt (FR)
(74) Mandataire: Regimbeau

(56) Documents cités:
- WO-A1-2012/167941
- WO-A2-2008/022198
- US-A1- 2004 203 900
- US-A1- 2004 235 493

## Description

### DOMAINE TECHNIQUE GENERAL

L'invention a pour objet la gestion sécurisée de la fourniture d'un service géolocalisé de communication entre deux utilisateurs de terminaux mobiles, délivré par un serveur d'un fournisseur de service. Elle concerne plus particulièrement un procédé d'échanges sécurisés entre les terminaux mobiles de deux utilisateurs par l'intermédiaire d'une plateforme de services en fonction d'informations de localisation.

### ETAT DE LA TECHNIQUE

De nombreux services mobiles utilisent actuellement la géolocalisation pour proposer à l'utilisateur d'un téléphone mobile des services personnalisés en fonction de sa localisation. Néanmoins l'obtention d'une telle information de localisation du téléphone mobile par une application de service requiert généralement l'accord de l'utilisateur. Ceci présente plusieurs inconvénients. Tout d'abord, un tel accord requiert généralement une action volontaire de l'utilisateur, sous la forme de texte à lire, de case à cocher, de bouton à cliquer etc... Ceci requiert du temps, consomme des ressources et peut pousser un utilisateur à abandonner l'utilisation d'un tel service. D'autre part, la localisation de l'utilisateur peut être considérée par celui-ci comme une donnée sensible, trop personnelle pour être partagée avec autrui, qui plus est avec un service mobile parfois commercial ; d'autant plus que le transfert de données de géolocalisation à destination d'un fournisseur de service mobile passe généralement par le réseau Internet, peu sécurisé, exposant ces données à un éventuel piratage de la part d'individus peu scrupuleux, au cours de leur transfert ou de leur stockage sur les serveurs du fournisseur. L'utilisateur peut ainsi considérer que la confidentialité de ses données personnelles n'est pas garantie. Certains utilisateurs peuvent pour cette raison être amenés à abandonner l'utilisation d'un service mobile plutôt que de lui confier des données de géolocalisation. Enfin, la présentation d'une demande d'accord de partage de données de géolocalisation et les applications mobiles utilisant de telles données requièrent généralement l'affichage d'une interface graphique évoluée, par exemple pour afficher une quantité non négligeable de texte, tel que des conditions d'utilisation, ou bien des données cartographiques. De ce fait, la plupart des applications mobiles actuelles utilisant la géolocalisation ne sont utilisables que sur des téléphones mobiles dotés de grands écrans, tel que des « smartphones », privant ainsi les détenteurs de téléphones mobiles à petits écrans de telles applications.

Ainsi, il existe un besoin d'une solution de communication permettant à un fournisseur de service de communiquer avec un téléphone mobile pour lui fournir un service en fonction de la zone de géolocalisation de ce téléphone mobile, sans requérir de l'utilisateur un accord de transmission de données de géolocalisation.

Parmi les services offerts par les fournisseurs de service existants, se trouvent des services de mise en relation entre divers utilisateurs de ces services. De tels services sont ainsi proposés par diverses applications de réseau social ou de communications instantanées. Lors d'un événement tel qu'un salon ou un festival, de telles applications peuvent être employées pour mettre en relation des participants à un tel événement. Néanmoins, les applications existantes requièrent généralement une identification de l'utilisateur auprès du fournisseur de service et l'identité de l'utilisateur est généralement partagée auprès des autres utilisateurs avec lesquels l'utilisateur est mis en relation. Ceci rend possible une sollicitation de l'utilisateur par le fournisseur du service ou par d'autres utilisateurs en dehors du lieu et de la durée de l'événement auquel l'utilisateur participe, empiétant ainsi sur sa vie privée.

Il existe donc également un besoin d'une solution permettant de sécuriser les échanges entre deux téléphones mobiles, de sorte à ce que ni le fournisseur du service de communication ni les autres utilisateurs n'ait jamais connaissance, à la fois de la position et de l'identité d'un utilisateur d'un téléphone mobile, et que la vie privée de celui-ci soit respectée Le document US 2004/203900 A1 décrit l'état antérieur pertinent de la technique.

### PRESENTATION DE L'INVENTION

La présente invention se rapporte ainsi à un procédé de mise en relation d'un terminal mobile d'un premier utilisateur et d'au moins un terminal mobile d'un deuxième utilisateur au moyen d'au moins un serveur d'un fournisseur de service de communication par l'intermédiaire d'une plateforme configurée pour être connectée à un réseau mobile, lesdits terminaux mobiles étant configurés pour être connectés au réseau mobile. Le procédé comprend les étapes suivantes mises en œuvre par la plateforme disposant d'une liste d'au moins un service, chaque service étant associé à au moins une zone géographique de disponibilité :
- obtention par l'intermédiaire du réseau mobile d'une première information de la zone de localisation du terminal mobile du premier utilisateur et d'une première donnée d'alias déterminée à partir d'un identifiant d'utilisateur associé au terminal mobile du premier utilisateur,
- en fonction de ladite première information de localisation obtenue et de la liste de services, détermination d'au moins un premier service de communication disponible, associé à au moins une zone géographique de disponibilité dans laquelle est localisé le terminal mobile du premier utilisateur,
- obtention, par l'intermédiaire du réseau mobile, d'au moins une deuxième information de la zone de localisation dudit au moins un terminal mobile du deuxième utilisateur et d'au moins une deuxième donnée d'alias déterminée à partir d'un identifiant d'utilisateur associé au terminal mobile du deuxième utilisateur,
- en fonction de ladite deuxième information de localisation obtenue, et de la liste de services, détermination d'au moins un deuxième service de communication disponible, associé à au moins une zone géographique de disponibilité dans laquelle est localisé le terminal mobile du deuxième utilisateur,
- sélection d'un service identique pour le terminal mobile du premier utilisateur parmi les premiers services de communication disponibles et pour au moins un terminal mobile du deuxième utilisateur parmi les deuxièmes services de communication disponibles, et mise en relation, par l'intermédiaire de la plateforme, en fonction de ladite première donnée d'alias et d'au moins une deuxième donnée d'alias, du terminal mobile du premier utilisateur et d'au moins un terminal mobile d'un deuxième utilisateur pour lequel ledit service a été sélectionné, au moyen dudit serveur du fournisseur du service sélectionné.

Un tel procédé permet de délivrer aux utilisateurs mis en communication un service géolocalisé, tout en ne divulguant pas l'identité d'un correspondant ni au fournisseur du service, ni à l'autre correspondant. Par ailleurs, les données de géolocalisation exactes du terminal d'un utilisateur n'étant pas transmises en dehors du réseau de l'opérateur, aucune autorisation de transmission de ces données ne doit être demandée à l'utilisateur.

L'identifiant d'utilisateur associé au terminal mobile du premier utilisateur ou du deuxième utilisateur peut être un identifiant associé à un module d'identification d'utilisateur du terminal mobile du premier utilisateur ou du deuxième utilisateur. Ceci permet de garantir que l'identifiant d'utilisateur employé identifie bien le propriétaire du terminal mobile.

Selon une caractéristique avantageuse et non limitative, ladite étape de mise en relation du procédé étant réalisée par l'intermédiaire d'un réseau sans fil à connexion anonyme connectant les terminaux mobiles à la plateforme, chaque étape d'obtention d'au moins une information de la zone de localisation d'au moins un terminal mobile d'un utilisateur du procédé peut comprendre une étape d'identification de l'utilisateur comprenant les étapes suivantes mises en œuvre par la plateforme :
- détermination d'un code temporaire d'identification associé à ladite donnée d'alias,
- transmission au terminal mobile par l'intermédiaire dudit réseau mobile dudit code temporaire d'identification,
- réception par l'intermédiaire dudit réseau sans fil à connexion anonyme d'un message en provenance du terminal mobile comprenant ledit code temporaire d'identification.

La délivrance à l'utilisateur d'un service géolocalisé, tout en ne divulguant pas l'identité de l'utilisateur du terminal mobile au fournisseur du service, est ainsi rendue possible même lorsque l'utilisateur est connecté à la plateforme par le biais d'un réseau à connexion anonyme tel qu'un réseau Wifi ouvert. En effet, la connexion à la plateforme par un tel réseau à connexion anonyme ne permet pas à celle-ci de déterminer la donnée d'alias relative à un utilisateur connecté anonymement mais les étapes supplémentaires décrites ci-dessus permettent, suite à l'obtention par la plateforme de l'alias d'un utilisateur connecté par le biais du réseau mobile, de faire correspondre à cet alias un code d'identification temporaire, et enfin d'établir une correspondance entre ce code d'identification temporaire et le même utilisateur connecté par le réseau à connexion anonyme. La plateforme obtient ainsi la donnée d'alias appropriée pour l'utilisateur connecté de manière anonyme.

Selon une autre caractéristique avantageuse et non limitative, le procédé peut comprendre une étape de transmission au terminal mobile d'un utilisateur, suite à la saisie correcte d'un code USSD (« Unstructured Supplementary Service Data » ou « Service supplémentaire pour données non structurées ») ou d'un numéro court par l'utilisateur sur son terminal mobile, d'un message permettant une connexion du terminal mobile à la plateforme.

Ceci permet à un utilisateur de se connecter simplement à la plateforme sans avoir à saisir une URL («Uniform Resource Locator » ou « localisateur uniforme de ressource ») complexe. De plus, la saisie d'un tel code ou numéro nécessitant uniquement un clavier à chiffres, une telle étape peut être mise en œuvre par n'importe quel type de téléphone et permet donc d'utiliser le procédé avec tout type de terminal mobile doté d'un clavier et d'un navigateur.

De plus, l'obtention d'une information de la zone de localisation d'un terminal peut être déclenchée suite à la détection d'une connexion du terminal mobile à la plateforme ou par une réception d'un message de requête transmis par le terminal mobile pour obtenir de la plateforme une liste de services disponibles. Ceci permet d'obtenir automatiquement les informations de la zone de localisation du terminal lors de sa connexion sans requérir de celui-ci l'envoi d'un message de requête de services disponibles et permet également au terminal de requérir de nouveau une liste des services disponibles après sa connexion initiale.

Selon des caractéristiques avantageuses et non limitatives, la plateforme peut identifier un service disponible sélectionné par un utilisateur d'un terminal mobile en mettant en œuvre les étapes suivantes:
- transmission au terminal mobile d'une liste de services disponibles correspondant à la zone géographique où est localisé le terminal mobile,
- réception d'un message d'identification du service sélectionné parmi les services disponibles, provenant du terminal mobile.

Ceci permet de ne proposer à l'utilisateur que les services auxquels sa zone de localisation géographique lui donne accès et de déterminer simplement le service souhaité par l'utilisateur parmi les différents services disponibles.

L'étape de mise en relation peut comprendre une étape de mise en correspondance desdites première et deuxième données d'alias avec des pseudonymes servant à identifier lesdits premier et deuxième utilisateurs auprès du serveur du fournisseur du service sélectionné, l'étape de mise en correspondance étant mise en œuvre par la plateforme, et la mise en relation est effectuée à l'aide desdits pseudonymes. Ceci permet à un utilisateur d'utiliser un pseudonyme temporaire et d'être identifié par des pseudonymes différents pour des services différents.

De plus, la mise en relation peut comprendre les étapes suivantes mises en œuvre par la plateforme:
- transmission au serveur du fournisseur du service sélectionné d'une demande relative au service sélectionné comprenant les pseudonymes associés aux terminaux mobiles des premier et deuxième utilisateurs,
- réception de données relatives à la fourniture dudit service en provenance du serveur du fournisseur du service sélectionné, au moins une partie des données reçues étant personnalisées pour les utilisateurs identifiés par les pseudonymes reçus,
- transmission des données relatives à la fourniture dudit service aux terminaux mobiles des premier et deuxième utilisateurs.

Ceci permet à la plateforme de mettre en communication les terminaux mobiles des premier et deuxième utilisateurs sans divulguer l'identité des utilisateurs au fournisseur du service. Ainsi celui-ci ne peut entrer en contact avec les terminaux mobiles sans passer par la plateforme, ce qui limite fortement les risques de sollicitation non désirée pour les utilisateurs.

L'étape de mise en relation peut également comprendre la transmission par la plateforme à un serveur du fournisseur du service sélectionné d'un code alphanumérique saisi par un utilisateur sur son terminal mobile ou bien d'un code correspondant à une balise NFC (« Near Field Communication »), un flashcode ou un e-beacon lu par l'utilisateur à l'aide de son terminal mobile, afin que ledit serveur du fournisseur de service délivre à l'utilisateur un service associé.

Ceci permet à l'utilisateur de pouvoir requérir simplement un service, sans avoir à parcourir une liste de services. Un tel code peut également être saisi sur n'importe quel type de terminal mobile à clavier, n'excluant ainsi pas du champ de l'invention les téléphones mobiles autres que les « smartphones ».

L'étape de mise en relation peut enfin comprendre au moins une étape mise en œuvre par l'intermédiaire de la plateforme parmi une étape de transmission au terminal mobile du premier ou du deuxième utilisateur de courrier électronique ou de message textuel provenant du serveur du fournisseur du service sélectionné et/ou une étape d'établissement de communications vocales avec le terminal mobile du premier ou du deuxième utilisateur. Ceci permet à l'utilisateur de recevoir des données de communication sous d'autres formats que des pages de type pages Internet, ces formats pouvant être plus adaptés à un service de communication. La transmission de ces données étant toujours réalisée par l'intermédiaire de la plateforme, l'identité des utilisateurs des terminaux mobiles n'est pas dévoilée au fournisseur de service ce qui permet de protéger les utilisateurs contre les sollicitations non désirées.

Le procédé peut comprendre par ailleurs une étape de mise à disposition d'un utilisateur par la plateforme d'une page personnelle comprenant des informations personnelles telles qu'une adresse de courrier électronique, lesdites informations personnelles pouvant être mises à jour par l'utilisateur. Ceci permet à l'utilisateur d'avoir un contrôle sur ses données personnelles portées à la connaissance de la plateforme et de pouvoir les corriger si elles s'avéraient inexactes.

Par ailleurs, l'échange de données entre la plateforme et un serveur de fournisseur de service peut être réalisé de manière sécurisée par l'intermédiaire d'un réseau privé virtuel (VPN) établi entre la plateforme et le serveur du fournisseur de service. Ceci permet de renforcer la sécurité des échanges de données entre la plateforme et les fournisseurs de service, tout dispositif extérieur au réseau de l'opérateur tentant de se connecter à un serveur d'un fournisseur de service étant rejeté.

Selon une caractéristique avantageuse et non limitative, chaque service étant associé, en outre, à au moins une information relative à la durée de délivrance dudit service :
- la détermination d'au moins un premier ou deuxième service disponible, associé à au moins une zone géographique de disponibilité dans laquelle est localisé le terminal mobile du premier ou deuxième utilisateur est fonction, en outre, des informations relatives à la durée de délivrance desdits services, et
- la mise en relation (E4), par l'intermédiaire de la plateforme (2), du terminal mobile (1.1) du premier utilisateur et d'au moins un terminal mobile d'un deuxième utilisateur est effectuée pendant la durée de délivrance dudit service sélectionné.

Un service de communication peut ainsi n'être proposé que de manière temporaire, par exemple à l'occasion d'un salon ou d'une conférence.

La présente invention se rapporte aussi à un produit programme d'ordinateur comprenant des instructions de code pour l'exécution d'un procédé selon l'invention lorsque ce programme est exécuté par un processeur.

La présente invention se rapporte, en outre, à une plateforme configurée pour être connectée à un réseau mobile et à mettre en relation un terminal mobile d'un premier utilisateur et au moins un terminal mobile d'un deuxième utilisateur au moyen d'au moins un serveur d'un fournisseur de service de communication,
lesdits terminaux mobiles étant configurés pour être connectés au réseau mobile,
caractérisée en ce qu'elle stocke une liste de services, chaque service étant associé à au moins une zone géographique de disponibilité et comprend :
- des moyens pour obtenir, par l'intermédiaire du réseau mobile, une première information de la zone de localisation du terminal mobile du premier utilisateur et une première donnée d'alias déterminée à partir d'un identifiant d'utilisateur associé au terminal mobile du premier utilisateur,
- en fonction de ladite première information de localisation obtenue, et de la liste de services, des moyens pour déterminer au moins un premier service de communication disponible, associé à au moins une zone géographique de disponibilité dans laquelle est localisé le terminal mobile du premier utilisateur,
- des moyens pour obtenir, par l'intermédiaire du réseau mobile, au moins une deuxième information de la zone de localisation dudit au moins un terminal mobile du deuxième utilisateur et au moins une deuxième donnée d'alias déterminée à partir d'un identifiant d'utilisateur associé au terminal mobile du deuxième utilisateur,

- en fonction de ladite deuxième information de localisation obtenue, et de la liste de services, des moyens pour déterminer au moins un deuxième service de communication disponible, associé à au moins une zone géographique de disponibilité dans laquelle est localisé le terminal mobile du deuxième utilisateur,
- des moyens pour sélectionner un service identique pour le terminal mobile du premier utilisateur parmi les premiers services de communication disponibles et pour au moins un terminal mobile du deuxième utilisateur parmi les deuxièmes services de communication disponibles, et mettre en relation, par l'intermédiaire de la plateforme, en fonction de ladite première donnée alias et d'au moins une deuxième donnée d'alias, le terminal mobile du premier utilisateur et l'au moins un terminal mobile d'un deuxième utilisateur pour lequel ledit service a été sélectionné, au moyen dudit serveur du fournisseur du service de communication sélectionné.

De tels produit programme d'ordinateur et plateforme présentent les mêmes avantages que ceux évoqués pour le procédé selon l'invention.

### PRESENTATION DES FIGURES

D'autres caractéristiques et avantages apparaîtront à la lecture de la description qui va suivre d'un mode de réalisation. Cette description sera donnée en référence aux dessins annexés dans lesquels :
- la figure 1 illustre schématiquement des moyens matériels pour une mise en œuvre possible pour l'invention ;
- la figure 2 illustre schématiquement des moyens matériels pour une mise en œuvre possible pour l'invention selon laquelle les communications utilisent le protocole HTTP ;
- la figure 3 est un diagramme schématisant un exemple de mise en œuvre d'un procédé de mise en relation selon un mode de mise en œuvre de l'invention ;
- les figures 4a, 4b, 4c, 4d illustrent un exemple d'accès par un utilisateur d'un terminal mobile à un service disponible avec saisie d'un code USSD ou d'un numéro court selon un mode de mise en œuvre de l'invention ;
- la figure 5 illustre un exemple de transmission de l'alias et des coordonnées géographiques du terminal mobile à la plateforme puis d'un pseudonyme au serveur du fournisseur de service sélectionné.

### DESCRIPTION DETAILLEE

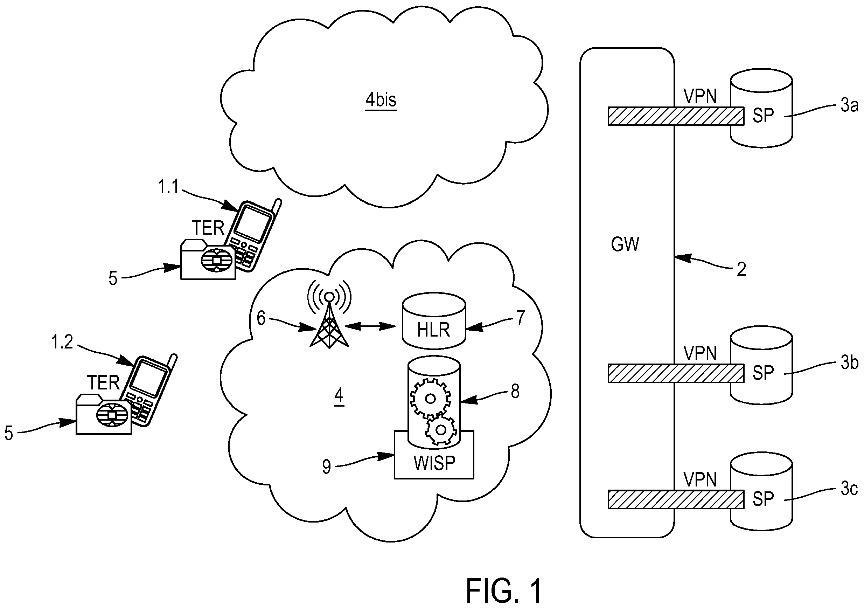

En référence à la figure 1, une mise en œuvre pour l'invention concerne un procédé de mise en relation d'un terminal mobile 1.1 d'un premier utilisateur et d'au moins un terminal mobile 1.2 d'un deuxième utilisateur au moyen d'au moins un serveur 3a, 3b, 3c... d'un fournisseur de service de communication par l'intermédiaire d'une plate-forme 2 configurée pour être connectée à un réseau mobile 4 géré par un opérateur. Lcs terminaux mobiles sont configurés pour être connectés au réseau mobile 4. En complément, les terminaux mobiles peuvent également être connectés à la plateforme par l'intermédiaire d'un réseau sans fil à connexion anonyme 4bis tel qu'un réseau Wifi. Chaque terminal mobile comprend un élément sécurisé 5. Un tel élément sécurisé 5 peut stocker des données sécurisées dans une mémoire, et peut consister par exemple en une carte à puce comportant un microprocesseur relié par un bus de données à une mémoire vive et à une mémoire non volatile réinscriptible telle qu'une mémoire flash ou une mémoire EEPROM et stockant de manière sécurisée dans sa mémoire non volatile des données et des applications exécutables par ledit microprocesseur. L'élément sécurisé est typiquement une carte SIM (« Suscriber Identity Module », ou « module d'identification de souscripteur ») appelée souvent « module d'identification d'abonné », dénommée dans ce document « module d'identification d'utilisateur »...

Lors d'une connexion au réseau mobile, chaque terminal mobile est identifié par le réseau mobile au moyen d'au moins un identifiant d'utilisateur.

Cet identifiant d'utilisateur est un identifiant associé à l'élément sécurisé 5, par exemple l'identifiant d'abonné (numéro IMSI, « International Mobile Subscriber Identity ») et/ou le numéro d'appel (numéro MSISDN, « Mobile Station Integrated Service Digital Network Number »). Un tel identifiant d'utilisateur est unique et sert aussi d'identifiant du module d'identification d'utilisateur. A cet égard, la notion d'identifiant d'utilisateur représente indifféremment dans ce document :
- un utilisateur, en tant que personne physique, souscripteur d'un compte client auprès d'un opérateur de réseau mobile (qu'il s'agisse d'un compte client avec ou sans abonnement, avec ou sans compte prépayé, etc...) et,
- un utilisateur, en tant que terminal mobile, connecté au réseau mobile, identifié et distingué des autres terminaux mobiles connectés au moyen du module d'identification d'utilisateur logé dans ce terminal.

L'utilisateur, personne physique, ayant souscrit un compte client auprès d'un opérateur de réseau mobile est reconnu au moyen d'un tel identifiant d'utilisateur comme utilisateur a priori du terminal mobile au travers du module d'identification d'utilisateur logé dans le terminal mobile utilisé, quelle que soit la personne physique utilisant effectivement ce terminal mobile et quel que soit le terminal mobile dans lequel est logé le module d'identification d'utilisateur.

Le procédé décrit ci-dessous est mis en œuvre par la plateforme 2 et permet la délivrance de manière sécurisée par un serveur d'un fournisseur de service 3a, 3b, 3c aux terminaux mobiles 1.1, 1.2 d'un service de communication géolocalisé. Pour ce faire, la plate-forme 2 se place comme un intermédiaire entre les terminaux mobiles et les serveurs 3a, 3b, 3c pour masquer l'identité réelle des utilisateurs de terminal mobile, en tant que personnes physiques. Chaque utilisateur n'est identifié auprès des serveurs 3a, 3b, 3c que par un pseudonyme. Ce pseudonyme peut être temporaire et la correspondance entre ce dernier et ledit alias de l'utilisateur n'est connue que de la plate-forme 2. Dans des variantes de mise en œuvre ce pseudonyme peut être permanent et identique à l'alias ou peut être fonction de l'alias. De plus, la correspondance entre cet alias/ce pseudonyme et l'identité réelle de l'utilisateur d'un terminal mobile reste inconnue des serveurs 3a, 3b, 3c qui n'entrent jamais en communication directe avec le terminal mobile. De plus les alias/pseudonymes sont inexploitables dans un autre contexte ou par une autre entité du réseau. L'utilisation d'un tel pseudonyme pour l'identification de l'utilisateur d'un terminal mobile par les serveurs de fournisseur de service permet également d'éviter à l'utilisateur du terminal mobile d'avoir à saisir un identifiant et un mot de passe pour s'identifier auprès des serveurs.

Le terminal mobile 1 d'un utilisateur peut consister en un téléphone mobile, un « smartphone », une tablette, une console de jeux, un ordinateur portable, un PDA (« Personal Digital Assistant ») ou tout autre terminal mobile doté d'un tel élément sécurisé 5 et de moyens de communication sans-fil lui permettant d'accéder au réseau mobile 4. Le terminal mobile 1 peut être un téléphone mobile de n'importe quel type, doté ou non d'un grand écran, d'une puce GPS, de moyens de saisies tactiles. Le terminal mobile inclut au moins une application logicielle, telle qu'un navigateur, capable d'afficher une page de type page internet tel qu'une page HTML ou PHP ou plus généralement d'établir une liaison de communication avec un serveur distant. Ainsi un tel terminal mobile n'est pas nécessairement un « smartphone ».

Le réseau mobile 4 peut consister en un réseau de téléphonie mobile du type GSM, GPRS, UMTS, LTE... Les communications sur ce réseau peuvent être sécurisées, notamment par chiffrement des données échangées. A titre d'exemple le réseau de téléphonie mobile représenté sur la **figure 1** est un réseau mobile du type GSM comprenant au moins une station de base (BTS) 6 connectée aux terminaux mobiles et au moins un enregistreur de localisation géographique des abonnés (HLR ou « Home Location Register ») 7. Le HLR consiste en une base de données centrale de l'opérateur de réseau mobile, comportant les informations relatives à tout utilisateur autorisé à utiliser ce réseau et notamment sa localisation dans le réseau. Le HLR contient notamment les informations suivantes caractérisant l'utilisateur lui-même: l'IMSI (« International Mobile Subscriber Identity »), identifiant unique de l'utilisateur et qui est aussi inscrit sur la carte SIM, l'IMEI (« International Mobile Equipment Identity») définissant la Station Mobile utilisée, soit généralement le téléphone mobile de l'utilisateur, le MSISDN indiquant le numéro d'appel international via lequel l'utilisateur est joignable...

Le réseau mobile comprend également un module de traitement 8 permettant de générer une donnée d'alias à partir d'au moins un identifiant d'utilisateur associé à l'élément sécurisé 5 tel que l'IMSI et/ou le MSDISDN fourni par le HLR 7. Un tel module de traitement 8 peut être inclus dans une WISP 9 (« Wireless Internet Service Provider ») ou être connecté à une WISP 9. On confondra par la suite le module de traitement 8 et la WISP. Cette donnée d'alias peut résulter de toute transformation de cet identifiant d'utilisateur ou de ces identifiants d'utilisateur, par exemple une transformation par application d'une fonction de hachage. La fonction de transformation est choisie de telle sorte que la donnée d'alias obtenue par transformation est unique et permanente, permettant ainsi une identification non équivoque par la plateforme 2 de la personne physique souscripteur du compte client et également du terminal mobile de l'utilisateur. Chaque donnée d'alias peut être mise en correspondance, par la plateforme 2, avec un pseudonyme utilisé comme unique identifiant de l'utilisateur du terminal mobile correspondant auprès des serveurs 3a, 3b, 3c des fournisseurs de service.

La donnée d'alias d'un utilisateur peut être générée au moment de la production et/ou configuration du module d'identification d'utilisateur, ou encore lors de la première connexion au réseau mobile de l'opérateur d'un terminal mobile intégrant ce module d'identification d'utilisateur. La donnée d'alias générée est stockée en association avec un identifiant d'utilisateur dans une base de données propre à l'opérateur. La donnée d'alias est permanente et ne change pas lors des connexions suivantes au réseau mobile. La donnée d'alias sert ainsi d'identifiant anonymisé du terminal mobile et/ou de l'utilisateur de ce terminal mobile et/ou du module d'identification d'abonné de ce terminal.

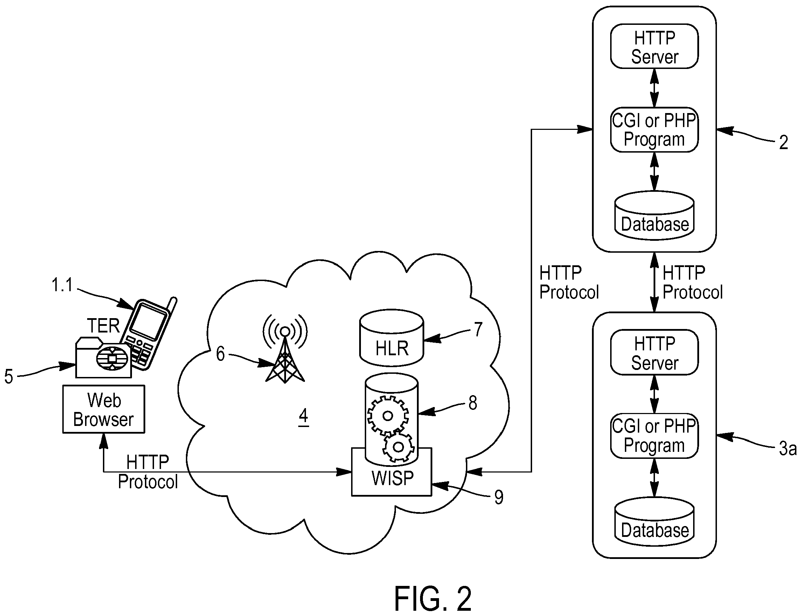

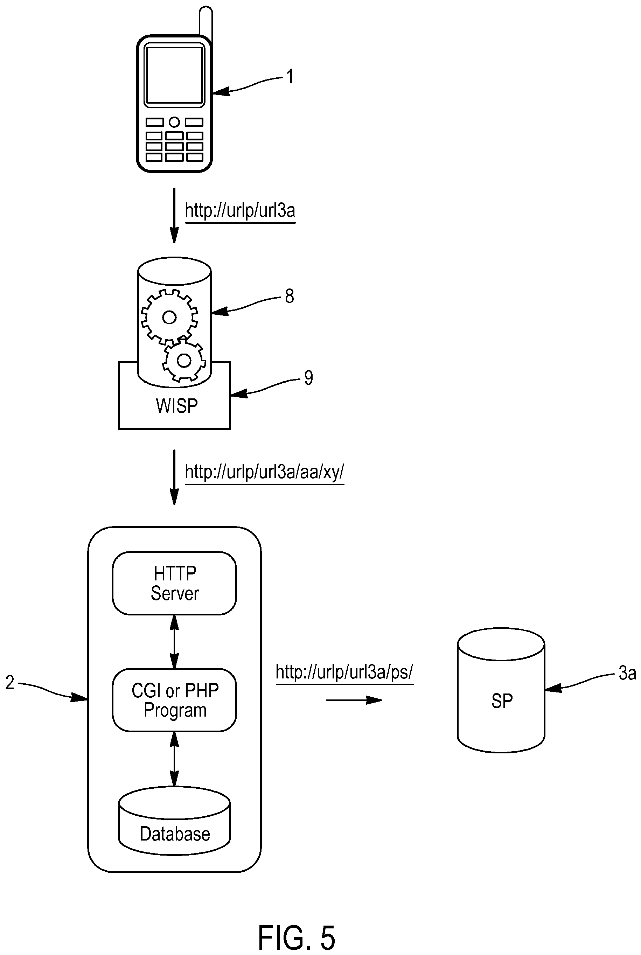

La plateforme 2 est conçue pour obtenir cette donnée d'alias, suite à la connexion du terminal mobile à la plateforme via le réseau mobile ou le réseau à connexion anonyme et pour transmettre un pseudonyme correspondant à cette donnée d'alias à un au moins des serveurs 3a, 3b, 3c des fournisseurs de service de communication. Un mode de réalisation utilisant le protocole HTTP (Hypertext Transfer Protocol) est décrit ci-dessous et illustré en référence aux **figures 2** **et** **5****.**

Un terminal mobile établit une connexion Web pour la connexion du terminal mobile à la plateforme. Par exemple, une première requête HTTP est envoyée par le terminal contenant l'URL (« Uniform Resource Locator ») correspondant à la plateforme : http://urlp/, où 'urlp' est le domaine Web géré par la plateforme.

Dans un premier mode de mise en œuvre les échanges entre le terminal mobile et la plateforme passent par le réseau mobile. Cette première requête HTTP est alors réceptionnée par la WISP. L'URL reçue est enrichie par la WISP en y insérant la donnée d'alias ('aa') et une information de zone de localisation 'xy'. L'URL enrichie est alors par exemple sous la forme http://urlp/aa/xy/. La plateforme reçoit ensuite la première requête HTTP contenant l'URL enrichie, et en extrait l'alias et l'information de zone de localisation. La plateforme n'a ainsi pas connaissance du ou des identifiants d'utilisateur utilisés pour la génération de la donnée d'alias.

Dans un deuxième mode de mise en œuvre, le terminal mobile est connecté à la plateforme par l'intermédiaire d'un réseau à connexion anonyme 4bis tel qu'un réseau Wifi utilisé pour la majorité des communications entre le terminal mobile et la plateforme. La donnée d'alias n'est alors pas incluse dans les messages transmis par le terminal mobile à la plateforme et celle-ci ne connait initialement le terminal mobile qu'au travers d'une donnée non personnelle telle que son adresse IP de connexion. Le terminal mobile doit alors préalablement s'identifier auprès de la plateforme pour que celle-ci lui associe la donnée d'alias appropriée. Pour cela le terminal mobile peut tout d'abord transmettre un message de demande de connexion à la plateforme par l'intermédiaire du réseau mobile. Comme décrit ci-dessus, ce message est transmis à la plateforme avec la donnée d'alias et l'information de zone de localisation du terminal mobile de l'utilisateur insérés par la WISP. En réponse à la réception d'un tel message, la plateforme peut générer un code d'identification temporaire correspondant à cet alias et transmettre celui-ci au terminal mobile par le biais du réseau mobile. A ce stade la plateforme n'a pas connaissance que le terminal mobile à qui elle vient de transmettre ce code d'identification temporaire par l'intermédiaire du réseau mobile est le même que celui connecté par l'intermédiaire du réseau à connexion anonyme. Le terminal mobile peut enfin s'identifier auprès de la plateforme par l'intermédiaire du réseau à connexion anonyme en lui retransmettant le code d'identification temporaire. A la réception de ce code d'identification temporaire par le biais du réseau à connexion anonyme, la plateforme peut identifier le terminal mobile lui ayant transmis ce code comme identique au terminal mobile à qui elle a précédemment transmis ce code par le biais du réseau mobile et dont elle connait la donnée d'alias. La plateforme peut alors mettre en correspondance cette donnée d'alias avec une donnée identifiant le terminal mobile connecté par l'intermédiaire du réseau à connexion anonyme, par exemple son adresse IP. La plateforme obtient ainsi la donnée d'alias appropriée à l'utilisateur connecté de manière anonyme à la plateforme par l'intermédiaire du réseau à connexion anonyme et l'information de zone de localisation de cet utilisateur.

Puis, en fonction de l'information de zone de localisation du terminal mobile et éventuellement d'informations relatives à la durée de délivrance desdits services, la plateforme va soit envoyer au terminal mobile une liste de serveurs disponibles (s'il y a plus d'un serveur associé à la zone de localisation) en renvoyant une liste d'URL possibles correspondant aux différents serveurs, soit router directement la première requête HTTP vers le seul serveur disponible. Lorsque la plateforme route directement la première requête HTTP vers le seul serveur disponible, elle ajoute le domaine Web 'url3a' géré par le serveur disponible, supprime l'information de zone de localisation de l'URL, et remplace la donnée d'alias aa par le pseudonyme ps: http://urlp/url3a/ps/. Lorsque la plateforme renvoie au terminal une liste d'URL, ces URL sont sous la forme
http://urlp/url3a
http://urlp/url3b
http://urlp/url3c
où url3a, url3b, url3c sont les domaines Web gérés par les serveurs 3a, 3b, 3c respectivement. Une deuxième requête HTTP est envoyée par le terminal mobile à la plateforme en utilisant une de ces URL.

Dans le premier mode de mise en œuvre, à nouveau la WISP intercepte cette requête HTTP et y insère la donnée d'alias 'aa' et une information de zone de localisation 'xy' : http://urlp/url3a/aa/xy par exemple. Puis la plateforme route la deuxième requête HTTP vers le serveur concerné, après remplacement de la donnée d'alias par le pseudonyme et suppression éventuelle de l'information de zone de localisation de l'URL : http://urlp/url3 a/ps/.

Dans le deuxième mode de mise en œuvre, c'est la plateforme qui détermine la donnée d'alias associée au terminal mobile connecté, par exemple grâce à la correspondance avec son adresse 1P. Puis la plateforme route la deuxième requête HTTP vers le serveur concerné, après insertion du pseudonyme associé à cette donnée d'alias et suppression éventuelle de l'information de zone de localisation de l'URL : http ://urlp/url3 a/ps/.

Le mécanisme d'enrichissement de requête HTTP qui vient d'être décrit sera utilisé pour toutes les requêtes émises par le terminal mobile vers la plateforme.

Les mécanismes décrits ci-dessus sont appliqués à tout terminal mobile se connectant à la plateforme, en particulier au terminal mobile du premier utilisateur et à au moins un terminal mobile d'un deuxième utilisateur à mettre en relation par l'intermédiaire d'un service de communication.

Les serveurs des fournisseurs de service 3a, 3b, 3c comprennent une mémoire vive et des moyens de stockage tels qu'une mémoire non volatile réinscriptible (mémoire flash ou mémoire EEPROM) pouvant stocker une base de données et des moyens de traitement comportant un processeur. Lesdits serveurs peuvent également comprendre des moyens d'interface leur permettant de se connecter à la plateforme 2, de type filaire tel qu'une liaison Ethernet, ou sans-fil tel qu'une connexion Wifi ou Bluetooth. De tels serveurs peuvent également être connectés par le biais d'une connexion USB, Ethernet, Firewire, eSata, etc... à un dispositif de stockage externe tel qu'un disque dur externe ou un disque dur en réseau (« NAS »). Un tel serveur est dédié à fournir un service de communication à au moins deux utilisateurs, par exemple par le biais d'un site mobile destiné à être affiché par le navigateur des terminaux mobiles des utilisateurs ou d'une application mobile destinée à être exécutée par les terminaux. Un tel service en ligne peut être fourni par le fournisseur de service pour le compte de l'organisateur d'un événement tel qu'un centre d'exposition... Un tel service peut n'être délivré que pendant une durée de délivrance prédéterminée par exemple la durée de l'exposition.

La plateforme 2 peut comprendre un serveur proxy, des moyens de stockage tels qu'une mémoire non volatile réinscriptible (mémoire flash ou mémoire EEPROM) pouvant stocker une base de données et des moyens de traitement comportant un processeur. Ladite plateforme 2 peut également comprendre des moyens d'interface, de type filaire tel qu'une liaison Ethernet, ou sans-fil telle qu'une connexion Wifi ou Bluetooth lui permettant de se connecter d'une part audit réseau mobile et/ou au réseau à connexion anonyme et d'autre part aux serveurs 3a, 3b, 3c... des fournisseurs de service.

Des réseaux privés virtuels (VPN, Virtual Private Network) peuvent être établis entre la plateforme 2 et chaque serveur 3a, 3b, 3c...d'un fournisseur de service. De tels réseaux privés virtuels peuvent être vus comme une extension des réseaux locaux et permettent de préserver la sécurité logique que l'on peut avoir à l'intérieur d'un réseau local.

Selon un mode de mise en œuvre de l'invention, les communications entre les terminaux mobiles 1.1, 1.2, le réseau mobile 4, la plateforme 2 et les serveurs des fournisseurs de service 3a, 3b, 3c utilisent le protocole http. Les moyens matériels correspondant à une telle mise en œuvre de l'invention sont représentés en **figure 2****.**

Pour permettre à un utilisateur d'accéder à un service de communication géolocalisé délivré par un fournisseur de service tout en sécurisant les échanges, le procédé d'échanges sécurisés peut être mis en œuvre en plusieurs phases : inscription des serveurs des fournisseurs de service auprès de la plateforme, connexion des terminaux mobiles à la plateforme, obtention d'informations relatives aux terminaux mobiles, accessibilité des utilisateurs aux services disponibles et délivrance aux terminaux mobiles d'un service de communication fourni par un fournisseur de service.

### Inscription des serveurs auprès de la plateforme

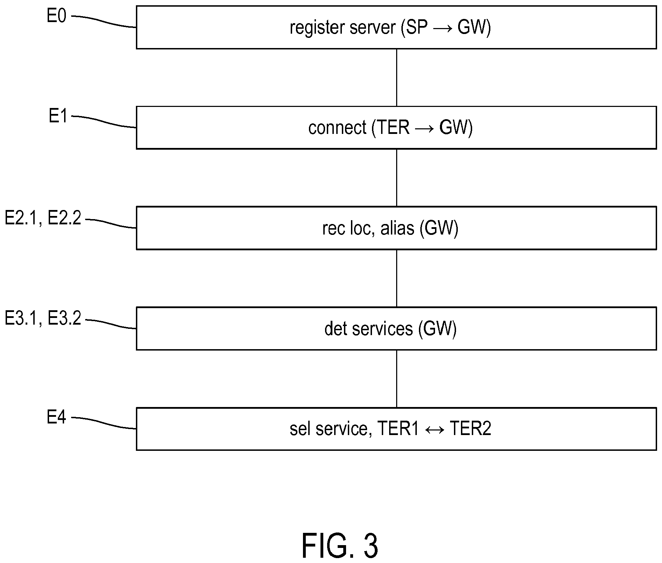

Lors d'une étape préparatoire E0, en référence à la **figure 3****,** chaque fournisseur de service inscrit son serveur 3a, 3b, 3c sur la plateforme 2 pour que les services géolocalisés qu'il propose puissent être délivrés par celle-ci aux terminaux mobiles, éventuellement pendant une durée de délivrance de service prédéterminée. Pour cela, chaque fournisseur de service indique une adresse physique caractérisant la localisation géographique de son établissement physique à proximité duquel il veut fournir un service géolocalisé, ainsi qu'éventuellement une information relative à la durée de délivrance du service. Une telle information relative à la durée de délivrance du service peut comprendre une date de début et une date de fin de disponibilité du service.

Dans un mode de réalisation non limitatif, l'adresse physique peut correspondre au centre géographique d'une activité de service sans que le fournisseur de service ne dispose nécessairement d'un établissement physique à ladite adresse, par exemple dans le cas d'un festival de rue. Un même fournisseur de service peut inscrire plusieurs établissements physiques géographiquement distants ou plusieurs activités de service géographiquement distantes. Le fournisseur de service peut également fournir une information telle qu'une distance maximale de fourniture d'un service par rapport à la localisation géographique indiquée, permettant à la plateforme 2 de déterminer une zone géographique de disponibilité dans laquelle ledit service peut être fourni à un utilisateur d'un terminal mobile. En l'absence de fourniture d'une telle information une zone géographique correspondant à un disque centré sur la localisation géographique indiquée et ayant pour rayon une valeur par défaut peut être retenue. Une telle zone géographique ne peut excéder le territoire couvert par l'opérateur du réseau mobile 4.

A l'issue de cette étape préparatoire E0, la plateforme 2 dispose d'une liste de services pour lesquels des fournisseurs de service ont enregistré un serveur, chaque service étant associé à au moins une zone géographique de disponibilité et éventuellement à une durée de délivrance du service. Ces données peuvent être stockées sous la forme d'une base de données enregistrée dans les moyens de stockage de la plateforme ou dans une base de données distante accessible par la plateforme. Ainsi, chaque fournisseur de service peut délimiter la ou les zones géographiques dans lesquelles il autorise l'utilisateur d'un terminal mobile à recevoir un service. Le fournisseur de service peut alors proposer un service adapté à cette localisation géographique, éventuellement limité dans le temps. Une zone géographique peut correspondre à une ou plusieurs cellules de localisation gérées par l'opérateur du réseau mobile. L'étendue de la zone géographique est ainsi variable et fonction de la portée maximum de la BTS de la ou des cellules correspondant à la zone géographique définie.

### Connexion du terminal mobile à la plateforme

Lors d'une première étape E1, au moins un utilisateur d'un terminal mobile demande la connexion de celui-ci à la plate-forme 2.

Selon une première variante, l'utilisateur saisit pour cela sur le navigateur de son terminal mobile une adresse réseau telle qu'une adresse IP ou une adresse http permettant de se connecter à la plateforme 2. Cette adresse peut ensuite être ajoutée en favoris.

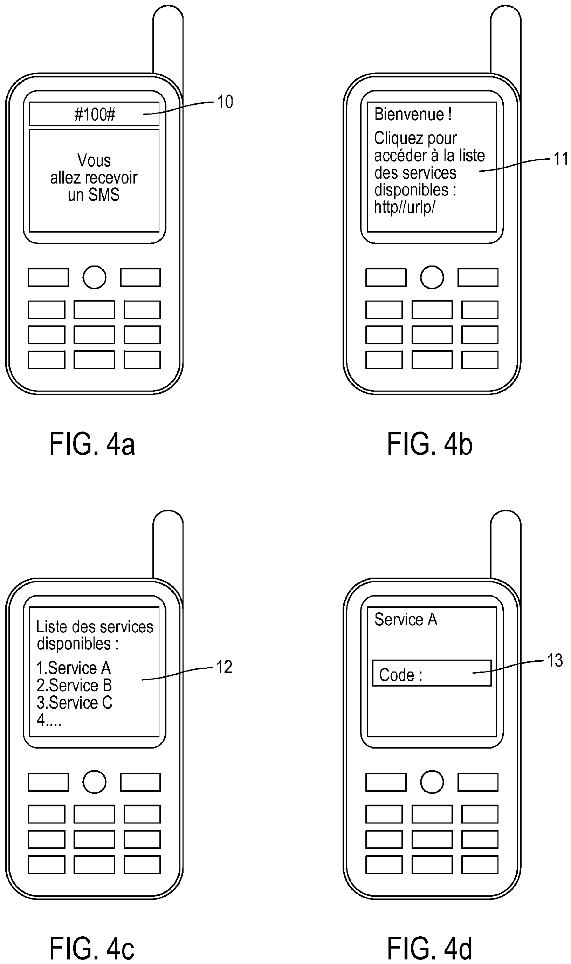

Selon une deuxième variante illustrée en **figures 4a à 4d****,** un code unique USSD (« Unstructured Supplementary Service Data ») 10, par exemple, #100#, ou bien un numéro court tel que « 555 » peut avoir été défini pour faciliter la connexion du terminal mobile à la plateforme 2. L'utilisateur peut alors saisir le code USSD ou composer ce numéro court sur le clavier de son terminal mobile et recevoir en réponse un message lui permettant de se connecter à la plateforme tel qu'un message SMS 11 dans le corps duquel se trouve l'adresse de la plateforme 2. Un tel SMS peut être remplacé par n'importe quel type de message traité par l'opérateur du réseau mobile 4, par exemple un MMS. L'adresse saisie est envoyée à la WISP 9 du réseau de l'opérateur.

La WISP 9 n'autorise que les accès de terminaux mobiles reconnus sur le réseau mobile 4, c'est-à-dire pour lesquels un identifiant d'utilisateur peut être obtenu, par exemple par interrogation du module d'identification d'utilisateur 5. Toute tentative de connexion par un terminal n'ayant pas de module d'identification d'utilisateur, ou essayant de se connecter à partir d'autres réseaux tel qu'Internet est refusée par la WISP.

### Obtention d'informations relatives au terminal mobile par la plateforme

Lors d'une deuxième étape E2.1, respectivement E2.2, la WISP 9 transmet la demande de connexion du terminal mobile du premier utilisateur 1.1, respectivement d'au moins un deuxième utilisateur 1.2 à la plateforme 2, assortie d'une information de localisation du terminal mobile 1.1, 1.2 du premier utilisateur, respectivement d'au moins un deuxième utilisateur et de la première donnée d'alias identifiant le premier utilisateur, respectivement d'au moins une deuxième donnée d'alias identifiant au moins un deuxième utilisateur. La WISP 9 peut obtenir ces informations par interrogation d'équipements du réseau mobile de l'opérateur tels que le HLR 7 et le module de traitement 8. Lors d'une telle interrogation, la WISP peut fournir un identifiant d'un terminal mobile : par exemple un identifiant d'utilisateur contenu dans le module d'identification d'utilisateur du terminal mobile requérant une connexion à la plateforme 2. La plateforme n'a pas besoin d'interroger le terminal mobile pour obtenir une information de localisation du terminal mobile.

La WISP 9 peut également transmettre à la plateforme 2 l'identifiant de l'opérateur du réseau mobile 4. Ces informations peuvent être transmises à la plateforme 2 par la WISP (Wireless Internet Service Provider) du réseau mobile 4 sous forme d'une url tel qu'un lien http, comme illustré en **figure 5****.** Aucun accord de transmission de données de géolocalisation de la part des premiers ou deuxièmes utilisateurs des terminaux mobiles 1.1, 1.2 n'est requis puisque la plateforme 2 fait partie des équipements de l'opérateur.

Selon une première variante, cette deuxième étape est déclenchée suite à la demande de connexion d'un terminal mobile à la plateforme 2 lors de la première étape E1.

Selon une deuxième variante, cette deuxième étape peut être déclenchée ultérieurement par l'envoi par un terminal mobile 1.1, 1.2 à la plateforme 2 d'un message de requête pour obtenir une liste de services disponibles. Un tel message peut par exemple être envoyé par le terminal mobile après réception d'un premier service afin de déterminer quels sont les autres services disponibles. La connexion initiale du terminal mobile à la plateforme 2 a alors déjà eu lieu depuis un certain temps. La plateforme obtient ainsi une première, respectivement deuxième information de la zone de localisation du terminal mobile du premier, respectivement au moins un deuxième utilisateur et la première, respectivement au moins une deuxième donnée d'alias déterminée à partir d'un identifiant d'utilisateur associé au terminal mobile du premier, respectivement au moins un deuxième utilisateur.

Dans le premier mode de mise en œuvre, dans lequel les échanges de messages entre un terminal mobile et la plateforme passent tous par le réseau mobile, la plateforme n'a aucune opération supplémentaire à mettre en œuvre pour associer chaque donnée d'alias reçue et l'utilisateur de terminal mobile correspondant auquel un service va être délivré par le biais du réseau mobile. Dans le deuxième mode de mise en œuvre dans lequel la plupart des messages entre la plateforme et un terminal mobile sont destinés à passer par l'intermédiaire d'un réseau à connexion anonyme, par exemple un réseau Wifi, le terminal mobile doit s'identifier auprès de la plateforme au travers du réseau à connexion anonyme pour que celle-ci fasse le lien entre cette connexion anonyme et la donnée d'alias reçue. La deuxième étape E2.1, E2.2 peut alors comprendre des étapes supplémentaires suivantes :
- une étape de détermination par la plateforme d'un code temporaire d'identification associé à la donnée d'alias,
- une première étape de transmission par la plateforme au terminal mobile par l'intermédiaire dudit réseau mobile dudit code temporaire d'identification,
- une deuxième étape de transmission par le terminal mobile à la plateforme du code d'identification par l'intermédiaire du réseau à connexion anonyme,
- une étape de réception par la plateforme par l'intermédiaire dudit réseau sans fil à connexion anonyme d'un message en provenance du terminal mobile comprenant ledit code temporaire d'identification.

La plateforme peut ainsi faire correspondre une donnée d'alias appropriée à l'utilisateur connecté de manière anonyme à la plateforme par l'intermédiaire du réseau à connexion anonyme.

### Accessibilité de l'utilisateur aux services disponibles

Lors d'une troisième étape E3.1, respectivement E3.2, la plateforme 2 détermine, en fonction de ladite première, respectivement deuxième information de localisation obtenue lors de la deuxième étape E2.1, E2.2, de la liste de services stockée à l'issue de l'étape E0 et éventuellement des informations relatives à la durée de délivrance desdits services, les premiers, respectivement deuxièmes services de communication disponibles, associés à au moins une zone géographique de disponibilité dans laquelle est localisé le terminal mobile du premier, respectivement de l'au moins un deuxième utilisateur. Ces services disponibles sont ceux auxquels la localisation géographique des terminaux mobiles 1.1, 1.2 vont leur donner le droit d'accéder.

Si la plateforme 2 identifie qu'aucun service n'est disponible pour un utilisateur, elle renvoie à son terminal mobile une page indiquant qu'aucun service n'est disponible dans la zone géographique dans laquelle se trouve l'utilisateur.

### Délivrance d'un service

Lors d'une quatrième étape E4, le premier utilisateur et au moins un deuxième utilisateur sont mis en communication par le biais d'un service de communication. Pour cela, un service de communication identique doit être sélectionné pour ces utilisateurs.

Si la plateforme 2 détermine qu'un seul service est disponible pour un utilisateur, ce service peut être automatiquement choisi par la plateforme 2 comme le service sélectionné auquel l'utilisateur va accéder lors de l'étape suivante.

Si la plateforme 2 détermine qu'au moins deux services sont disponibles pour un utilisateur, celle-ci transmet à son terminal mobile une page comportant une liste des services disponibles 12 dans la zone géographique de l'utilisateur. Cette liste est avantageusement classée par ordre croissant de distance entre la zone de localisation géographique du terminal mobile et la localisation géographique de l'établissement physique associé au service comme illustré en **figure 4c****.**

Selon une variante, la plateforme 2 renvoie également une page comportant une liste lorsqu'elle détermine qu'un seul service est disponible pour l'utilisateur. Pour envoyer des messages à un terminal mobile, tels que par exemple des pages comprenant des listes de services disponibles, la plate-forme peut envoyer ces messages à la WISP accompagnés de la donnée d'alias utilisée pour identifier le destinataire du message, ou bien transmettre directement ces messages au terminal mobile par le biais du réseau à connexion anonyme. Lorsque plusieurs services sont accessibles, un service est sélectionné dans la liste transmise.

Dans une première variante, un utilisateur sélectionne lui-même un service dans la liste affichée sur son terminal mobile.

Dans le premier mode de mise en œuvre, un message identifiant le service sélectionné parmi les services disponibles est alors transmis du terminal mobile à la WISP. La WISP retransmet ce message à la plateforme après lui avoir ajouté l'information de la zone de localisation du terminal mobile et la donnée d'alias identifiant l'utilisateur du terminal mobile. Ces informations peuvent être transmises par la WISP à la plateforme sous forme d'une URL tel qu'une adresse http.

Dans le deuxième mode de mise en œuvre, dans le cas d'une connexion à la plateforme par l'intermédiaire d'un réseau à connexion anonyme, c'est la plateforme qui détermine la donnée d'alias associée au terminal mobile connecté.

Dans une deuxième variante, une règle de sélection d'un service est appliquée afin de procéder à une sélection automatique d'un service. La règle de sélection est par exemple basée sur des critères tels que : proximité entre la localisation géographique de la zone de connexion du terminal mobile et celle associé au service, ordre de préférence défini entre les services, nouveauté du service, type de service (cinéma, restaurant, supermarché, etc...) ou autres. Dans cette variante, c'est la plateforme 2 qui identifie au moins un service sélectionné parmi les services disponibles déterminés en appliquant une règle de sélection. Une confirmation peut être demandée à l'utilisateur.

Pour mettre en communication deux utilisateurs, un service identique est sélectionné pour le terminal mobile du premier utilisateur parmi les premiers services de communication disponibles et pour au moins un terminal mobile du deuxième utilisateur parmi les deuxièmes services de communication disponibles.

Suite à cette sélection d'un service de communication, la plateforme 2 met en relation, en fonction de ladite première donnée alias et d'au moins une deuxième donnée d'alias, le terminal mobile du premier utilisateur et au moins un terminal mobile d'un deuxième utilisateur au moyen du serveur du fournisseur du service de communication sélectionné 3a, 3b, 3c afin que le service de communication sélectionné soit délivré aux utilisateurs.

Lorsque chaque service est associé à au moins à une information relative à la durée de délivrance dudit service, et lorsque la détermination des premiers et deuxièmes services disponibles a été réalisée en fonction de ces informations de durée de délivrance, la mise en relation des terminaux mobiles peut être effectuée pendant la durée de délivrance du service sélectionné. Optionnellement, lors de la quatrième étape E4, la plateforme peut mettre en correspondance les première et deuxième données d'alias avec des pseudonymes servant à identifier les premier et deuxième utilisateurs auprès du serveur du fournisseur de service sélectionné. Ces pseudonymes contrairement aux données d'alias qui sont permanentes peuvent être temporaires et n'être valides que pendant la durée de délivrance dudit service. Un pseudonyme peut être automatiquement attribué à l'utilisateur d'un terminal mobile et modifiable par la suite.

Pour mettre en relation les terminaux mobiles, la plateforme 2 transmet une demande de service au serveur du fournisseur du service de communication sélectionné 3a, 3b, 3c. Cette demande peut comprendre les pseudonymes des terminaux mobiles des premier et deuxièmes utilisateurs requérant le service. Ces pseudonymes pourront être utilisés par le fournisseur de service pour identifier les utilisateurs lors de différents échanges de données relatifs à un service ou lors d'accès successifs à un service sans que le fournisseur de service n'ait à connaître l'identité réelle des utilisateurs. Le fournisseur de service ne connaît notamment pas l'identifiant d'utilisateur ni le numéro MSISDN des terminaux mobiles et n'a aucun moyen de contacter directement les terminaux mobiles ce qui permet aux utilisateurs de ne pas être sollicités contre leur gré par de tels fournisseurs de service. Une telle demande de service peut être transmise par la plateforme sous la forme d'une url tel qu'une adresse http comprenant les pseudonymes. Les données relatives à la fourniture du service sélectionné sont alors envoyées par le serveur du fournisseur de service 3a, 3b, 3c à la plateforme 2. Au moins une partie des données envoyées peut être personnalisée pour les utilisateurs identifiés par les pseudonymes reçus.

Dans le premier mode de mise en œuvre, la plateforme 2 remplace chaque pseudonyme par la donnée d'alias associée et retransmet ces données à la WISP du réseau de l'opérateur qui, connaissant la correspondance entre la donnée d'alias d'un terminal mobile et son identifiant d'utilisateur, transmet à chaque terminal mobile les données relatives à la fourniture du service afin que son utilisateur puisse accéder au service de communication sélectionné.

Dans le deuxième mode de mise en œuvre, la plateforme retransmet directement ces données aux terminaux mobiles par l'intermédiaire du réseau mobile.

Dans le premier mode de mise en œuvre, les commandes pouvant être saisies par un terminal mobile dans le cadre de l'accès au service, tel que le fait de cliquer sur un lien ou un bouton dans une page envoyée par le fournisseur de service, sont envoyées par le terminal mobile à la WISP. Celle-ci les retransmet à la plateforme en remplaçant toute information d'identité du terminal mobile par la donnée d'alias générée par le module de traitement 8 pour le terminal mobile.

Dans le deuxième mode de mise en œuvre, dans le cas d'une connexion à la plateforme par l'intermédiaire d'un réseau à connexion anonyme, ces commandes sont transmises directement par le terminal mobile à la plateforme par l'intermédiaire du réseau à connexion anonyme et c'est la plateforme qui détermine la donnée d'alias associée au terminal mobile connecté.

Dans les deux modes de mise en œuvre, la plateforme retransmet ensuite ces commandes assorties du pseudonyme au serveur du fournisseur de service.

Comme illustré en **figure 4d****,** l'utilisateur d'un terminal mobile peut saisir un code alphanumérique sur son terminal mobile, par exemple dans un champ de saisie 13 d'une page envoyée par un serveur du fournisseur de service 3a, 3b, 3c, ou bien lire une balise NFC, un flashcode ou un e-beacon avec son terminal mobile afin de requérir la délivrance par ce serveur d'un service associé, une fois le code saisi ou le code correspondant à une balise NFC, le flashcode ou le e-beacon retransmis par la plateforme au serveur du fournisseur de service 3a, 3b, 3c.

Le filtrage des services disponibles réalisé par la plateforme en fonction de la localisation géographique d'un terminal mobile et éventuellement des informations relatives à la durée de délivrance desdits services lors de la troisième étape E3.1, E3.2 et l'anonymisation des données communiquées au fournisseur de service grâce à l'utilisation de données d'alias ou de pseudonymes lors de la quatrième étape E4 permettent que le fournisseur de service délivre aux utilisateurs des terminaux mobiles un service de communication géolocalisé, éventuellement limité dans le temps tout en garantissant la confidentialité de l'identité des utilisateurs et de leur localisation géographique puisque ces données ne sont jamais transmises au fournisseur de service. Par ailleurs, les données de la zone de localisation des terminaux mobiles n'étant jamais transmises en dehors des équipements de l'opérateur, aucune autorisation de transmission de ces données ne doit être demandée aux utilisateurs.

### Accès direct à un serveur

Un utilisateur souhaitant accéder à un service dont il connaît déjà l'existence et dont le terminal mobile est déjà connecté à la plateforme 2, peut utiliser son terminal mobile 1 pour envoyer à la plateforme 2 une requête de fourniture dudit service.

Dans le premier mode de mise en œuvre, la WISP ajoute à cette requête une information de localisation du terminal mobile et une donnée d'alias identifiant l'utilisateur du terminal mobile avant de retransmettre cette requête à la plateforme, comme lors de la troisième étape E3.1, E3.2.

Dans le deuxième mode de mise en œuvre, dans le cas d'une connexion à la plateforme par l'intermédiaire d'un réseau à connexion anonyme, c'est la plateforme qui détermine la donnée d'alias associée au terminal mobile connecté. La plateforme peut également déduire la localisation géographique du terminal mobile en fonction de la zone couverte par le point d'accès du réseau à connexion anonyme auquel le terminal est connecté.

La plateforme 2 détermine lors de la réception d'une telle requête si la localisation géographique du terminal mobile lui donne le droit d'accéder au service demandé, c'est-à-dire si sa zone de localisation géographique est comprise dans une zone géographique de disponibilité du service demandé et éventuellement si le service est disponible en fonction de l'information relative à la durée du service demandé. Si c'est bien le cas, la quatrième étape E4 est mise en œuvre afin de fournir le service demandé au terminal mobile. Sinon, l'accès au service est refusé au terminal mobile et la plateforme 2 lui envoie une page indiquant ce refus d'accès et lui proposant une liste des services disponibles pour sa zone de localisation géographique.

### Reroutage de services

Les données envoyées par le fournisseur de service à la plateforme 2 à destination d'un terminal mobile peuvent consister en des pages de type page internet destinées à être affichées par le navigateur du terminal mobile. La plateforme 2 peut également transmettre aux terminaux mobiles des données de service de communication autres que des pages de type pages Internet.

Dans le premier mode de mise en œuvre, la plateforme peut transmettre de telles données de service accompagnées d'une donnée d'alias identifiant leur destinataire à la WISP qui, grâce à sa connaissance de la correspondance entre la donnée d'alias et l'identifiant d'utilisateur du terminal mobile, peut transmettre de telles données au terminal mobile pour le compte d'un serveur d'un fournisseur de service 3a, 3b, 3c.

Dans le deuxième mode de mise en œuvre, la plateforme peut transmettre de telles données de service directement au terminal mobile par le biais du réseau à connexion anonyme.

Le terminal mobile peut ainsi se voir transmettre des messages de type SMS ou MMS, ou message instantané. A titre d'exemple les échanges de telles données entre un serveur d'un fournisseur de service, la plateforme et la WISP peuvent se faire via le protocole FTP ou le protocole SNPP par exemple.

Selon une variante, la plateforme 2 peut transférer une demande d'envoi de message électronique tel qu'un email pour le compte d'un fournisseur de service 3a, 3b, 3c.

Dans le premier mode de mise œuvre, cette demande peut être envoyée accompagnée de la donnée d'alias à la WISP qui se chargera de transmettre le message électronique au destinataire grâce à sa connaissance de la correspondance entre la donnée d'alias et l'identifiant d'utilisateur du terminal mobile.

Dans le deuxième mode de mise en œuvre, dans le cas d'une connexion à la plateforme par l'intermédiaire d'un réseau à connexion anonyme, la plateforme peut transmettre directement cet email au terminal mobile par le biais du réseau à connexion anonyme.

Selon une autre variante, la plateforme 2 peut également établir une communication vocale entre les terminaux mobiles des premier et deuxièmes utilisateurs suite à une demande de mise en relation vocale émise par un serveur d'un fournisseur de service. Si les données d'alias des au moins deux utilisateurs appartiennent à un seul opérateur, la plateforme transmet la demande de mise en relation vocale accompagnée des données d'alias à l'unique opérateur concerné qui se charge ensuite d'établir la communication vocale entre appelants et appelés.

Si les données d'alias appartiennent à deux opérateurs différents, la plateforme transmet la demande de mise en relation vocale de l'au moins un appelé accompagnée de son alias à l'opérateur concerné, en retour celui-ci renvoie à la plateforme un numéro d'appel temporaire. La plateforme transmet alors l'alias de l'au moins un appelant ainsi que le numéro d'appel temporaire au deuxième opérateur qui se charge d'établir la communication vocale entre les appelants et les appelés. Alternativement, la plateforme peut transmettre aux appelants et appelés le numéro d'un serveur de conférence téléphonique destiné à être appelé par les participants pour établir la communication.

Si un ou plusieurs des terminaux mobiles sont connectés à la plateforme par l'intermédiaire du réseau à connexion anonyme, la plateforme peut transférer une demande d'appel à un terminal mobile sous la forme d'un appel en voix sur IP (« VOIP »).

Afin que l'utilisateur d'un terminal mobile ne reçoive pas de manière massive des messages ou appels non sollicités, la plateforme 2 peut mettre à disposition de l'utilisateur une page internet personnelle d'administration à laquelle l'utilisateur peut se connecter depuis son terminal mobile pour vérifier des informations personnelles telles que son adresse de courrier électronique (email), et pour corriger ces informations si nécessaire. Optionnellement, l'utilisateur peut également spécifier sur cette page s'il accepte de recevoir des messages de la part de fournisseurs de service par SMS, email, ou communication vocale et peut également spécifier un nombre maximal de messages qu'il accepte de recevoir par ces biais sur une période donnée, par exemple une semaine ou un mois. Une telle page internet est accessible depuis le terminal mobile en se connectant à l'adresse du site publique de la plateforme. Lors de la première connexion d'un terminal mobile à cette page, la plateforme crée un espace personnel d'administration lié à la donnée d'alias du terminal mobile. Lors de toutes les connexions ultérieures, la plateforme donnera accès automatiquement à l'utilisateur du terminal mobile à cet espace personnel sans que l'utilisateur ait à fournir un identifiant ou un mot de passe.

En variante, une telle page est une page internet accessible depuis n'importe quel dispositif connecté au réseau Internet. Afin de pouvoir identifier l'espace personnel auquel il cherche à accéder, l'utilisateur peut s'identifier auprès de la plateforme à l'aide d'un processus d'identification à base de code temporaire d'identification similaire à celui décrit lors de la deuxième étape E2.1, E2.2 ci-dessus. L'utilisateur peut envoyer depuis son terminal mobile un SMS contenant un mot-clé particulier à un numéro prédéfini. Lors de l'envoi de ce SMS à la plateforme, l'opérateur remplace le numéro de l'émetteur par l'alias du terminal mobile. A la réception du SMS, la plateforme transmet un code temporaire d'identification à destination du terminal mobile identifié par son alias. Ce code peut être délivré au terminal mobile sous la forme d'un SMS selon le processus décrit ci-dessus. La saisie par l'utilisateur du code d'identification sur la page internet de la plateforme lui permet alors de s'identifier auprès de la plateforme et d'accéder à l'espace d'administration lié à son terminal mobile.

### Déplacements du terminal pendant un accès à un service

La localisation géographique de la zone d'un terminal mobile est déterminée une première fois après la demande de connexion du terminal mobile à la plateforme 2 puis lors de la sélection d'un service parmi les services disponibles. Si le terminal mobile sort de la zone géographique associée à un ensemble de services alors que des données relatives à un de ces services sont en train de lui être délivrées par un serveur du fournisseur du service, la transmission de ces données au terminal mobile sera interrompue.

Dans le cas où le terminal mobile s'est déplacé depuis le moment de sa connexion à la plateforme et que le terminal mobile est entré dans une nouvelle zone géographique lui donnant accès à un ou plusieurs autres services, une requête de rafraîchissement de la liste de services accessibles peut être déclenchée à partir du terminal mobile, par exemple, sur demande de l'utilisateur de ce terminal mobile ou automatiquement par la plateforme qui constate qu'une requête a été émise par le terminal mobile localisé en dehors de la zone localisée du fournisseur de service. Dans les deux cas, une liste actualisée des services accessibles, fonction de la nouvelle localisation du terminal mobile, sera transmise au terminal mobile pour être affichée sur le terminal mobile.

### Applications

Le procédé peut être utilisé pour fournir à un utilisateur un service de communication anonyme avec d'autres utilisateurs. Ni le serveur fournisseur du service ni les autres utilisateurs n'auront connaissance de l'identifiant d'utilisateur ni de la donnée d'alias associés à cet utilisateur. A la place, ils n'auront connaissance de l'identité de cet utilisateur qu'au travers de la donnée d'alias associée à cet utilisateur ou du pseudonyme choisi par la plateforme et remplaçable à volonté. Comme décrit ci-dessus, un tel service peut permettre à ses utilisateurs de communiquer par le biais d'échanges de messages texte ou sous forme de communications vocales. De plus, le procédé peut être utilisé pour ne mettre ainsi en relation que des utilisateurs situés dans une zone géographique donnée et éventuellement durant une période de temps particulière. Un tel procédé est ainsi particulièrement adapté pour mettre en relation de manière anonyme et bornée dans le temps et l'espace les visiteurs d'un endroit donné tel qu'un musée ou les participants à un événement donné tel qu'un congrès, un festival, un salon... Il est possible grâce au procédé proposé de ne mettre en relation, anonymement, que les participants physiquement présents dans un lieu précis et éventuellement uniquement durant la durée d'un événement particulier.

A titre d'exemple, le procédé selon l'invention peut être employé pour mettre en relation de manière anonyme les participants à une conférence pour leur permettre de poser des questions et éventuellement de fournir des réponses. Pour cela, chaque participant peut se connecter avant le début de la conférence à la plateforme par le biais de son terminal mobile. Puis, lorsqu'un utilisateur souhaite poser une question à l'assemblée, il peut transmettre sa question à la plateforme. Celle-ci reçoit cette question par l'entremise de l'opérateur du terminal mobile de l'utilisateur interrogateur, accompagnée de l'alias de cet utilisateur. La plateforme peut alors remplacer cet alias par le pseudonyme de l'utilisateur interrogateur et transmettre la question de l'utilisateur accompagnée de ce pseudonyme à l'ensemble des terminaux mobiles des autres utilisateurs connectés pour cette conférence. Chaque participant à la conférence peut ainsi se voir communiquer les interventions des autres participants, de manière sécurisée et anonyme, chaque participant n'étant identifié auprès des autres participants que par son pseudonyme. Le procédé permet également, lors de la conférence, aux participants connectés et représentés par leur pseudonyme d'entrer en communication vocale par le biais d'un numéro de conférence téléphonique initié par la plateforme sur demande du serveur. Les participants pourront également échanger de manière anonyme des SMS/MMS.

Dans le cadre d'un salon, le procédé peut être employé pour proposer à un visiteur des services de communication mobiles disponibles correspondant aux services de communication délivrés par le salon et ses exposants pendant la durée dudit salon. Ces services de communication peuvent comprendre la mise en relation avec un concierge voire une conciergerie du salon et/ou d'un ou plusieurs des espaces du salon tels que notamment les restaurants, permettant au visiteur de demander une ou plusieurs indications, telles que les différents horaires des manifestations se tenant sur le salon et la possibilité de s'y inscrire, la liste des restaurants ainsi que leurs menus et la possibilité d'effectuer des réservations, le plan du salon, la liste des exposants avec un lien sur le site mobile de l'exposant etc. Si un exposant intéresse l'utilisateur du terminal mobile, ce dernier peut être mis en relation avec l'exposant et/ou un des différents responsables du stand, notamment pour connaître l'agenda de la journée etc. par le biais de la plateforme. Par exemple, sur requête de l'utilisateur, des responsables de stand peuvent également être contactés en établissant une communication vocale ou par SMS par l'intermédiaire de la plateforme. Le visiteur va pouvoir ainsi contacter le responsable de stand désiré sans avoir à fournir son numéro de terminal mobile et sans connaître le numéro d'appel de la personne qu'il contacte. En outre, les visiteurs de ce salon pourront également entrer en relation entre eux pour une conversation téléphonique anonyme, pour une conférence téléphonique entre plusieurs pseudonymes ou encore pour communiquer anonymement via des SMS/MMS.

## Revendications

1. Procédé de mise en relation d'un terminal mobile (1.1) d'un premier utilisateur et d'au moins un terminal mobile (1.2) d'un deuxième utilisateur au moyen d'au moins un serveur d'un fournisseur de service de communication (3a, 3b, 3c) par l'intermédiaire d'une plateforme (2) configurée pour être connectée à un réseau mobile (4),
lesdits terminaux mobiles (1.1, 1.2) étant configurés pour être connectés au réseau mobile, **caractérisé en ce qu'**il comprend les étapes suivantes mises en œuvre par la plateforme (2) disposant d'une liste d'au moins un service, chaque service étant associé à au moins une zone géographique de disponibilité :
- obtention (E2.1), par l'intermédiaire du réseau mobile, d'une première information de la zone de localisation du terminal mobile du premier utilisateur et d'une première donnée d'alias déterminée à partir d'un identifiant d'utilisateur associé au terminal mobile (1.1) du premier utilisateur,
- en fonction de ladite première information de localisation obtenue, et de la liste de services,
- détermination d'au moins un premier service de communication (E3.1) disponible, associé à au moins une zone géographique de disponibilité dans laquelle est localisé le terminal mobile (1.1) du premier utilisateur,
- obtention (E2.2), par l'intermédiaire du réseau mobile, d'au moins une deuxième information de la zone de localisation dudit au moins un terminal mobile du deuxième utilisateur et d'au moins une deuxième donnée d'alias déterminée à partir d'un identifiant d'utilisateur associé au terminal mobile (1.2) du deuxième utilisateur,
- en fonction de ladite deuxième information de localisation obtenue, et de la liste de services, détermination d'au moins un deuxième service de communication (E3.2) disponible, associé à au moins une zone géographique de disponibilité dans laquelle est localisé le terminal mobile (1.2) du deuxième utilisateur,
- sélection (E4) d'un service identique pour le terminal mobile du premier utilisateur parmi les premiers services de communication disponibles et pour ledit au moins un terminal mobile du deuxième utilisateur parmi les deuxièmes services de communication disponibles, et mise en relation (E4), par l'intermédiaire de la plateforme (2), en fonction de ladite première donnée alias et d'au moins une deuxième donnée d'alias, du terminal mobile (1.1) du premier utilisateur et dudit au moins un terminal mobile du deuxième utilisateur (1.2) pour lequel ledit service a été sélectionné, au moyen dudit serveur du fournisseur du service de communication sélectionné (3a, 3b, 3c).

2. Procédé de mise en relation selon la revendication 1, dans lequel l'identifiant d'utilisateur associé au terminal mobile du premier utilisateur ou du deuxième utilisateur est un identifiant associé à un module d'identification d'utilisateur du terminal mobile du premier utilisateur ou du deuxième utilisateur.

3. Procédé de mise en relation selon l'une des revendications précédentes, dans lequel, ladite étape de mise en relation étant réalisée par l'intermédiaire d'un réseau sans fil à connexion anonyme (4bis) connectant les terminaux mobiles à la plateforme, chaque étape d'obtention (E2.1, E2.2) d'au moins une information de la zone de localisation d'au moins un terminal mobile d'un utilisateur comprend une étape d'identification de l'utilisateur comprenant les étapes suivantes mises en œuvre par la plateforme :
- détermination d'un code temporaire d'identification associé à ladite donnée d'alias,
- transmission au terminal mobile par l'intermédiaire dudit réseau mobile dudit code temporaire d'identification,
- réception par l'intermédiaire dudit réseau sans fil à connexion anonyme d'un message en provenance du terminal mobile comprenant ledit code temporaire d'identification.

4. Procédé de mise en relation selon l'une des revendications précédentes, comprenant une étape de transmission au terminal mobile (1) d'un utilisateur, suite à la saisie correcte d'un code USSD ou d'un numéro court par l'utilisateur sur son terminal mobile, d'un message permettant une connexion du terminal mobile (1) à la plateforme (2).

5. Procédé de mise en relation selon l'une des revendications précédentes, dans lequel l'obtention (E2.1, E2.2) d'une information de zone de localisation d'un terminal (1.1, 1.2) est déclenchée suite à la détection d'une connexion du terminal mobile (1.1, 1.2) à la plateforme (2) ou par une réception d'un message de requête transmis par le terminal mobile (1.1, 1.2) pour obtenir de la plateforme une liste de services disponibles.

6. Procédé de mise en relation selon l'une des revendications précédentes, dans lequel la plateforme identifie un service disponible sélectionné par un utilisateur d'un terminal mobile en mettant en œuvre les étapes suivantes :
- transmission au terminal mobile (1.1, 1.2) d'une liste de services disponibles correspondant à la zone géographique où est localisé le terminal mobile,
- réception d'un message d'identification du service sélectionné parmi les services disponibles, provenant du terminal mobile (1.1, 1.2).

7. Procédé de mise en relation selon l'une des revendications précédentes, dans lequel l'étape de mise en relation (E4) comprend une mise en correspondance (E4) desdites première et deuxièmes données d'alias avec des pseudonymes servant à identifier lesdits premier et deuxième utilisateurs auprès du serveur du fournisseur du service sélectionné, l'étape de mise en correspondance étant mise en œuvre par la plateforme (2), et dans lequel la mise en relation (E4) est effectuée à l'aide desdits pseudonymes.

8. Procédé de mise en relation selon la revendication précédente, dans lequel l'étape de mise en relation (E4) comprend les étapes suivantes mises en œuvre par la plateforme (2) :
- transmission au serveur du fournisseur du service sélectionné (3a, 3b, 3c) d'une demande relative au service sélectionné comprenant les pseudonymes associés aux terminaux mobiles des premier et deuxième utilisateurs (1.1, 1.2),
- réception de données relatives à la fourniture dudit service en provenance du serveur du fournisseur du service sélectionné (3a, 3b, 3c), au moins une partie des données reçues étant personnalisées pour les utilisateurs identifiés par les pseudonymes reçus,
- transmission des données relatives à la fourniture dudit service aux terminaux mobiles des premier et deuxième utilisateurs (1.1, 1.2).

9. Procédé de mise en relation selon l'une des revendications précédentes, dans lequel l'étape de mise en relation (E4) comprend la transmission par la plateforme (2) à un serveur du fournisseur du service sélectionné (3a, 3b, 3c) d'un code alphanumérique saisi par un utilisateur sur son terminal mobile (1.1, 1.2) ou bien d'un code correspondant à une balise NFC (« Near Field Communication »), un flashcode ou un e-beacon lu par l'utilisateur à l'aide de son terminal mobile, afin que ledit serveur du fournisseur de service délivre à l'utilisateur un service associé.

10. Procédé de mise en relation selon l'une des revendications précédentes, dans lequel l'étape de mise en relation (E4) comprend au moins une étape, mise en œuvre par l'intermédiaire de la plateforme (2), parmi une étape de transmission au terminal mobile (1) du premier ou du deuxième utilisateur de courrier électronique ou de message textuel provenant du serveur du fournisseur du service sélectionné (3a, 3b, 3c) et/ou une étape d'établissement de communications vocales avec le terminal mobile (1) du premier ou du deuxième utilisateur.

11. Procédé de mise en relation selon l'une des revendications précédentes, comprenant une étape de mise à disposition d'un utilisateur par la plateforme d'une page personnelle comprenant des informations personnelles telles qu'une adresse de courrier électronique, lesdites informations personnelles pouvant être mises à jour par l'utilisateur.

12. Procédé de mise en relation selon l'une des revendications précédentes, dans lequel l'échange de données entre la plateforme et un serveur de fournisseur de service est réalisé de manière sécurisée par l'intermédiaire d'un réseau privé virtuel (VPN) établi entre la plateforme et le serveur de fournisseur de service.

13. Procédé de mise en relation selon l'une des revendications précédentes, dans lequel, chaque service étant associé, en outre, à au moins une information relative à la durée de délivrance dudit service:
- la détermination d'au moins un premier ou deuxième service (E3.1, E3.2) disponible, associé à au moins une zone géographique de disponibilité dans laquelle est localisé le terminal mobile (1) du premier ou deuxième utilisateur est fonction, en outre, des informations relatives à la durée de délivrance desdits services, et
- la mise en relation (E4), par l'intermédiaire de la plateforme (2), du terminal mobile (1.1) du premier utilisateur et d'au moins un terminal mobile du deuxième utilisateur est effectuée pendant la durée de délivrance dudit service sélectionné.

14. Produit programme d'ordinateur comprenant des instructions de code pour l'exécution d'un procédé selon l'une quelconque des revendications précédentes lorsque ce programme est exécuté par un processeur.

15. Plateforme (2) configurée pour être connectée à un réseau mobile (4) et mettre en relation un terminal mobile (1.1) d'un premier utilisateur et au moins un terminal mobile (1.2) d'un deuxième utilisateur au moyen d'au moins un serveur d'un fournisseur de service de communication (3a, 3b, 3c),
- lesdits terminaux mobiles (1.1, 1.2) étant configurés pour être connectés au réseau mobile (4), **caractérisée en ce qu'**elle stocke une liste de services, chaque service étant associé à au moins une zone géographique de disponibilité et comprend :
- des moyens pour obtenir, par l'intermédiaire du réseau mobile, une première information de la zone de localisation du terminal mobile du premier utilisateur et une première donnée d'alias déterminée à partir d'un identifiant d'utilisateur associé au terminal mobile (1.1) du premier utilisateur,
- en fonction de ladite première information de localisation obtenue, et de la liste de services, des moyens pour déterminer au moins un premier service de communication disponible, associé à au moins une zone géographique de disponibilité dans laquelle est localisé le terminal mobile (1.1) du premier utilisateur,
- des moyens pour obtenir, par l'intermédiaire du réseau mobile, au moins une deuxième information de la zone de localisation dudit au moins un terminal mobile du deuxième utilisateur et au moins une deuxième donnée d'alias déterminée à partir d'un identifiant d'utilisateur associé au terminal mobile (1.2) du deuxième utilisateur,
- en fonction de ladite deuxième information de localisation obtenue, et de la liste de services, des moyens pour déterminer au moins un deuxième service de communication disponible, associé à au moins une zone géographique de disponibilité dans laquelle est localisé le terminal mobile (1.2) du deuxième utilisateur,
- des moyens pour sélectionner un service identique pour le terminal mobile du premier utilisateur parmi les premiers services de communication disponibles et pour ledit au moins un terminal mobile du deuxième utilisateur parmi les deuxièmes services de communication disponibles, et mettre en relation, par l'intermédiaire de la plateforme (2), en fonction de ladite première donnée alias et de ladite au moins une deuxième donnée d'alias, le terminal mobile (1.1) du premier utilisateur et l'au moins un terminal mobile du deuxième utilisateur (1.2) pour lequel ledit service a été sélectionné, au moyen dudit serveur du fournisseur du service de communication sélectionné (3a, 3b, 3c).

## Patentansprüche

1. Verfahren zur Verknüpfung eines mobilen Endgeräts (1.1) eines ersten Benutzers und mindestens eines mobilen Endgeräts (1.2) eines zweiten Benutzers mittels mindestens eines Servers eines Kommunikationsdienstanbieters (3a, 3b, 3c) mittels einer Plattform (2), die dazu ausgebildet ist, mit einem Mobilnetz (4) verbunden zu sein,
wobei die mobilen Endgeräte (1.1, 1.2) dazu ausgebildet sind, mit dem Mobilnetz verbunden zu sein, **dadurch gekennzeichnet, dass** es die folgenden Schritte umfasst, die von der Plattform (2) durchgeführt werden, die über eine Liste mit mindestens einem Dienst verfügt, wobei jeder Dienst mindestens einer geografischen Verfügbarkeitszone zugeordnet ist:
- Beziehen (E2.1), mittels des Mobilnetzes, einer ersten Information der Lokalisationszone des mobilen Endgeräts des ersten Benutzers und einer ersten Aliasangabe, die anhand einer Benutzerkennung bestimmt wird, die dem mobilen Endgerät (1.1) des ersten Benutzers zugeordnet ist,
- in Abhängigkeit von der bezogenen ersten Lokalisationsinformation und der Liste mit Diensten,
- Bestimmen mindestens eines ersten verfügbaren Kommunikationsdienstes (E3.1), der mindestens einer ersten geografischen Verfügbarkeitszone zugeordnet ist, in welcher sich das mobile Endgerät (1.1) des ersten Benutzers befindet,
- Beziehen (E2.2), mittels des Mobilnetzes, mindestens einer zweiten Information der Lokalisationszone des mindestens einen mobilen Endgeräts des zweiten Benutzers und mindestens einer zweiten Aliasangabe, die anhand einer Benutzerkennung bestimmt wird, die dem mobilen Endgerät (1.2) des zweiten Benutzers zugeordnet ist,
- in Abhängigkeit von der bezogenen zweiten Lokalisationsinformation und der Liste mit Diensten, Bestimmen mindestens eines zweiten verfügbaren Kommunikationsdienstes (E3.2), der mindestens einer geografischen Verfügbarkeitszone zugeordnet ist, in welcher sich das mobile Endgerät (1.2) des zweiten Benutzers befindet,
- Auswählen (E4) eines identischen Dienstes für das mobile Endgerät des ersten Benutzers aus den verfügbaren ersten Kommunikationsdiensten und für **das mindestens eine** mobile Endgerät des zweiten Benutzers aus den verfügbaren zweiten Kommunikationsdiensten, und Verknüpfen (E4), mittels der Plattform (2), in Abhängigkeit von der ersten Aliasangabe und mindestens einer zweiten Aliasangabe, des mobilen Endgeräts (1.1) des ersten Benutzers und **des mindestens einen** mobilen Endgeräts des zweiten Benutzers (1.2), für den der Dienst ausgewählt wurde, mittels des Servers des Anbieters des ausgewählten Kommunikationsdienstes (3a, 3b, 3c).

2. Verknüpfungsverfahren nach Anspruch 1, wobei die Benutzerkennung, die dem mobilen Endgerät des ersten Benutzers oder des zweiten Benutzers zugeordnet ist, eine Kennung ist, die einem Benutzeridentifikationsmodul des mobilen Endgeräts des ersten Benutzers oder des zweiten Benutzers zugeordnet ist.

3. Verknüpfungsverfahren nach einem der vorhergehenden Ansprüche, wobei, wobei der Schritt des Verknüpfens mittels eines drahtlosen Netzwerks mit anonymer Verbindung (4bis) durchgeführt wird, das die mobilen Endgeräte mit der Plattform verbindet, jeder Schritt des Beziehens (E2.1, E2.2) mindestens einer Information der Lokalisationszone mindestens eines mobilen Endgeräts eines Benutzers einen Schritt des Identifizierens des Benutzers umfasst, der die folgenden Schritte umfasst, die von der Plattform durchgeführt werden:
- Bestimmen eines temporären Identifikationscodes, der der Aliasangabe zugeordnet ist,
- Übertragen des temporären Identifikationscodes an das mobile Endgerät mittels des Mobilnetzes,
- Empfangen, mittels des drahtlosen Netzwerks mit anonymer Verbindung, einer Nachricht vom mobilen Endgerät umfassend den temporären Identifikationscode.

4. Verknüpfungsverfahren nach einem der vorhergehenden Ansprüche, umfassend einen Schritt des Übertragens einer Nachricht, die eine Verbindung des mobilen Endgeräts (1) mit der Plattform (2) gestattet, an das mobile Endgerät (1) eines Benutzers nach der korrekten Erfassung eines USSD-Codes oder einer Kurznummer durch den Benutzer auf seinem mobilen Endgerät.

5. Verknüpfungsverfahren nach einem der vorhergehenden Ansprüche, wobei das Beziehen (E2.1, E2.2) einer Information einer Lokalisationszone eines Endgeräts (1.1, 1.2) nach der Erkennung einer Verbindung des mobilen Endgeräts (1.1, 1.2) mit der Plattform (2) oder durch einen Empfang einer Anforderungsnachricht, die vom mobilen Endgerät (1.1, 1.2) übertragen wird, um von der Plattform eine Liste mit verfügbaren Diensten zu beziehen, ausgelöst wird.

6. Verknüpfungsverfahren nach einem der vorhergehenden Ansprüche, wobei die Plattform einen verfügbaren Dienst identifiziert, der von einem Benutzer eines mobilen Endgeräts ausgewählt wird, indem die folgenden Schritte durchgeführt werden:
- Übertragen einer Liste mit verfügbaren Diensten, die der geografischen Zone entsprechen, wo sich das mobile Endgerät befindet, an das mobile Endgerät (1.1, 1.2),
- Empfangen einer Identifikationsnachricht des Dienstes, der aus den verfügbaren Diensten ausgewählt wurde, vom mobilen Endgerät (1.1, 1.2).

7. Verknüpfungsverfahren nach einem der vorhergehenden Ansprüche, wobei der Schritt des Verknüpfens (E4) ein In-Entsprechung-Bringen (E4) der ersten und zweiten Aliasangabe mit Pseudonymen zur Identifikation des ersten und zweiten Benutzers beim Server des Anbieters des ausgewählten Dienstes umfasst, wobei der Schritt des In-Entsprechung-Bringens von der Plattform (2) durchgeführt wird, und wobei das Verknüpfen (E4) mithilfe der Pseudonyme durchgeführt wird.

8. Verknüpfungsverfahren nach dem vorhergehenden Anspruch, wobei der Schritt des Verknüpfens (E4) die folgenden Schritte umfasst, die von der Plattform (2) durchgeführt werden:
- Übertragen einer Anforderung bezogen auf den ausgewählten Dienst, umfassend die Pseudonyme, die den mobilen Endgeräten des ersten und zweiten Benutzers (1.1, 1.2) zugeordnet sind, an den Server des Anbieters des ausgewählten Dienstes (3a, 3b, 3c),
- Empfangen von Daten bezogen auf die Bereitstellung des Dienstes von dem Server des Anbieters des ausgewählten Dienstes (3a, 3b, 3c), wobei zumindest ein Teil der empfangenen Daten für die Benutzer, die durch die empfangenen Pseudonyme identifiziert sind, personalisiert sind,
- Übertragen der Daten bezogen auf die Bereitstellung des Dienstes an die mobilen Endgeräten des ersten und zweiten Benutzers (1.1, 1.2).

9. Verknüpfungsverfahren nach einem der vorhergehenden Ansprüche, wobei der Schritt des Verknüpfens (E4) das Übertragen, von der Plattform (2), eines alphanumerischen Codes, der von einem Benutzer auf dessen mobilen Endgerät (1.1, 1.2) erfasst wird, oder eines Codes, der einem NFC-("Near Field Communication") Beacon, einem Flashcode oder einem e-Bacon entspricht, der vom Benutzer mithilfe dessen mobilen Endgerät gelesen wird, an einen Server des Anbieters des ausgewählten Dienstes (3a, 3b, 3c) umfasst, damit der Server des Dienstanbieters dem Benutzer einen zugehörigen Dienst erbringt.

10. Verknüpfungsverfahren nach einem der vorhergehenden Ansprüche, wobei der Schritt des Verknüpfens (E4) mindestens einen Schritt, der mittels der Plattform (2) durchgeführt wird, von einem Schritt des Übertragens, an das mobile Endgerät (1) des ersten oder zweiten Benutzers, einer Email oder einer Textnachricht vom Server des Anbieters des ausgewählten Dienstes (3a, 3b, 3c) und/oder einem Schritt des Herstellens von Sprachkommunikationen mit dem mobilen Endgerät (1) des ersten oder zweiten Benutzers umfasst.

11. Verknüpfungsverfahren nach einem der vorhergehenden Ansprüche, umfassend einen Schritt des Bereitstellens, an einen Benutzer, durch die Plattform, einer persönlichen Seite umfassend persönliche Informationen wie beispielsweise eine Emailadresse, wobei die persönlichen Informationen vom Benutzer aktualisiert werden können.

12. Verknüpfungsverfahren nach einem der vorhergehenden Ansprüche, wobei der Datenaustausch zwischen der Plattform und einem Dienstanbieter-Server sicher mittels eines virtuellen privaten Netzwerks (VPN) durchführt wird, das zwischen der Plattform und dem Dienstanbieter-Server hergestellt ist.

13. Verknüpfungsverfahren nach einem der vorhergehenden Ansprüche, wobei, wobei jeder Dienst ferner mindestens einer Information bezogen auf die Erbringungsdauer des Dienstes zugeordnet ist:
- das Bestimmen mindestens eines ersten oder zweiten verfügbaren Dienstes (E3.1, E3.2), der mindestens einer geografischen Verfügbarkeitszone zugeordnet ist, in welcher sich das mobile Endgerät (1) des ersten oder zweiten Benutzers befindet, ferner von den Informationen bezogen auf die Erbringungsdauer der Dienste abhängig ist, und
- das Verknüpfen (E4), mittels der Plattform (2), des mobilen Endgeräts (1.1) des ersten Benutzers und mindestens eines mobilen Endgeräts des zweiten Benutzers, während der Erbringungsdauer des ausgewählten Dienstes durchgeführt wird.

14. Computerprogramm umfassend Code-Anweisungen für die Ausführung eines Verfahrens nach einem der vorhergehenden Ansprüche, wenn dieses Programm durch einen Prozessor ausgeführt wird.

15. Plattform (2), die dazu ausgebildet ist, mit einem Mobilnetz (4) verbunden zu sein und ein mobiles Endgerät (1.1) eines ersten Benutzers und mindestens ein mobiles Endgerät (1.2) eines zweiten Benutzers mittels mindestens eines Servers eines Kommunikationsdienstanbieters (3a, 3b, 3c) zu verknüpfen,
- wobei die mobilen Endgeräte (1.1, 1.2) dazu ausgebildet sind, mit dem Mobilnetz (4) verbunden zu sein,
**dadurch gekennzeichnet, dass** sie eine Liste mit Diensten speichert, wobei jeder Dienst mindestens einer geografischen Verfügbarkeitszone zugeordnet ist und Folgendes umfasst:
- Mittel zum Beziehen, mittels des Mobilnetzes, einer ersten Information der Lokalisationszone des mobilen Endgeräts des ersten Benutzers und einer ersten Aliasangabe, die anhand einer Benutzerkennung bestimmt wird, die dem mobilen Endgerät (1.1) des ersten Benutzers zugeordnet ist,
- in Abhängigkeit von der bezogenen ersten Lokalisationsinformation und der Liste mit Diensten, Mittel zum Bestimmen mindestens eines ersten verfügbaren Kommunikationsdienstes, der mindestens einer geografischen Verfügbarkeitszone zugeordnet ist, in welcher sich das mobile Endgerät (1.1) des ersten Benutzers befindet,
- Mittel zum Beziehen, mittels des Mobilnetzes, mindestens einer zweiten Information der Lokalisationszone des mindestens einen mobilen Endgeräts des zweiten Benutzers und mindestens einer zweiten Aliasangabe, die anhand einer Benutzerkennung bestimmt wird, die dem mobilen Endgerät (1.2) des zweiten Benutzers zugeordnet ist,
- in Abhängigkeit von der bezogenen zweiten Lokalisationsinformation und der Liste mit Diensten, Mittel zum Bestimmen mindestens eines zweiten verfügbaren Kommunikationsdienstes, der mindestens einer geografischen Verfügbarkeitszone zugeordnet ist, in welcher sich das mobile Endgerät (1.2) des zweiten Benutzers befindet,
- Mittel zum Auswählen eines identischen Dienstes für das mobile Endgerät des ersten Benutzers aus den verfügbaren ersten Kommunikationsdiensten und für **das mindestens eine** mobile Endgerät des zweiten Benutzers aus den verfügbaren zweiten Kommunikationsdiensten, und Verknüpfen, mittels der Plattform (2), in Abhängigkeit von der ersten Aliasangabe und **der mindestens einen** zweiten Aliasangabe, des mobilen Endgeräts (1.1) des ersten Benutzers und des mindestens einen mobilen Endgeräts des zweiten Benutzers (1.2), für den der Dienst ausgewählt wurde, mittels des Servers des Anbieters des ausgewählten Kommunikationsdienstes (3a, 3b, 3c).

## Claims

1. Method for linking a mobile terminal (1.1) of a first user and at least one mobile terminal (1.2) of a second user via at least one server of a communications service provider (3a, 3b, 3c) via a platform (2) configured to be connected to a mobile network (4),
said mobile terminals (1.1, 1.2) being configured to be connected to the mobile network, **characterized in that** it comprises the following steps performed by the platform (2) having a list of at least one service, each service being linked to at least one geographic availability zone:
- obtaining (E2.1), via the mobile network, a first item of information on the location zone of the mobile terminal of the first user and a first alias datum determined from a user identifier linked to the mobile terminal (1.1) of the first user;
- depending on said first item of location information obtained, and on the list of services,
- determining at least one first available communications service (E3.1), linked to at least one geographic availability zone in which the mobile terminal (1.1) of the first user is located;
- obtaining (E2.2), via the mobile network, at least one second item of information on the location zone of said at least one mobile terminal of the second user and at least one second alias datum determined from a user identifier linked to the mobile terminal (1.2) of the second user;
- depending on said second item of location information obtained, and on the list of services, determining at least one second available communications service (E3.2), linked to at least one geographic availability zone in which the mobile terminal (1.2) of the second user is located; and
- selecting (E4) an identical service for the mobile terminal of the first user from among the first available communication services and for **said at least one** mobile terminal of the second user from among the second available communication services, and linking (E4), via the platform (2), depending on said first alias datum and on at least one second alias datum, of the mobile terminal (1.1) of the first user and of **said at least one** mobile terminal of the second user (1.2) for which said service has been selected, via said server of the provider of the selected communication service (3a, 3b, 3c).

2. Linking method according to Claim 1, wherein the user identifier linked to the mobile terminal of the first user or of the second user is an identifier linked to a user identification module of the mobile terminal of the first user or of the second user.

3. Linking method according to one of the preceding claims, wherein, said linking step being performed via an anonymous connection wireless network (4bis) connecting the mobile terminals to the platform, each step of obtaining (E2.1, E2.2) at least one item of information on the location zone of at least one mobile terminal of a user comprises a step of identifying the user comprising the following steps performed by the platform:
- determining a temporary identification code linked to said alias datum;
- transmitting, to the mobile terminal via said mobile network, said temporary identification code; and
- receiving, via said anonymous connection wireless network, a message originating from the mobile terminal comprising said temporary identification code.

4. Linking method according to one of the preceding claims, comprising a step of transmitting to the mobile terminal (1) of a user, following correct input of a USSD code or a short number by the user on their mobile terminal, a message allowing connection of the mobile terminal (1) to the platform (2).

5. Linking method according to one of the preceding claims, wherein obtaining (E2.1, E2.2) an item of location zone information on a terminal (1.1, 1.2) is triggered following detection of a connection of the mobile terminal (1.1, 1.2) to the platform (2) or by receipt of a request message transmitted by the mobile terminal (1.1, 1.2) to obtain a list of available services from the platform.

6. Linking method according to one of the preceding claims, wherein the platform identifies an available service selected by a user of a mobile terminal by performing the following steps:
- transmitting, to the mobile terminal (1.1, 1.2), a list of available services corresponding to the geographic zone where the mobile terminal is located; and
- receiving an identification message for the selected service from among the available services, originating from the mobile terminal (1.1, 1.2).

7. Linking method according to one of the preceding claims, wherein the linking step (E4) comprises matching (E4) said first and second alias data with pseudonyms serving to identify said first and second users with the server of the provider of the selected service, the matching step being performed by the platform (2), and wherein linking (E4) is performed using said pseudonyms.

8. Linking method according to the preceding claim, wherein the linking step (E4) comprises the following steps performed by the platform (2):
- transmitting, to the server of the provider of the selected service (3a, 3b, 3c), a request relating to the selected service comprising the pseudonyms linked to the mobile terminals of the first and second users (1.1, 1.2);
- receiving data relating to the provision of said service originating from the server of the provider of the selected service (3a, 3b, 3c), at least some of the data received being personalized for the users identified by the received pseudonyms; and
- transmitting data relating to the provision of said service to the mobile terminals of the first and second users (1.1, 1.2).

9. Linking method according to one of the preceding claims, wherein the linking step (E4) comprises transmitting, by the platform (2) to a server of the provider of the selected service (3a, 3b, 3c), an alphanumeric code input by a user on their mobile terminal (1.1, 1.2) or else a code corresponding to an NFC ("Near-Field Communication") beacon, a flashcode or an e-beacon read by the user via their mobile terminal so that said server of the service provider delivers an associated service to the user.

10. Linking method according to one of the preceding claims, wherein the linking step (E4) comprises at least one step, performed via the platform (2), from among a step of transmitting, to the mobile terminal (1) of the first or of the second user, an email or text message originating from the server of the provider of the selected service (3a, 3b, 3c) and/or a step of setting up voice communications with the mobile terminal (1) of the first or of the second user.

11. Linking method according to one of the preceding claims, comprising a step of providing a user, via the platform, with a personal web page comprising personal information such as an email address, said personal information being able to be updated by the user.

12. Linking method according to one of the preceding claims, wherein the data exchange between the platform and a service provider server is performed securely via a virtual private network (VPN) set up between the platform and the service provider server.

13. Linking method according to one of the preceding claims, wherein, each service further being linked to at least one item of information relating to the delivery period of said service:
- the determination of at least one available first or second service (E3.1, E3.2), linked to at least one geographic availability zone in which the mobile terminal (1) of the first or second user is located is further dependent on information relating to the delivery period of said services, and
- the linking (E4), via the platform (2), of the mobile terminal (1.1) of the first user and of at least one mobile terminal of the second user is performed during the delivery period of said selected service.

14. Computer program product comprising code instructions for executing a method according to any one of the preceding claims when this program is executed by a processor.

15. Platform (2) configured to be connected to a mobile network (4) and to link a mobile terminal (1.1) of a first user and at least one mobile terminal (1.2) of a second user via at least one server of a communications service provider (3a, 3b, 3c),
- said mobile terminals (1.1, 1.2) being configured to be connected to the mobile network (4), **characterized in that** it stores a list of services, each service being linked to at least one geographic availability zone and comprises:
- means for obtaining, via the mobile network, a first item of information on the location zone of the mobile terminal of the first user and a first alias datum determined from a user identifier linked to the mobile terminal (1.1) of the first user;
- depending on said first item of location information obtained, and on the list of services, means for determining at least one first available communications service, linked to at least one geographic availability zone in which the mobile terminal (1.1) of the first user is located;
- means for obtaining, via the mobile network, at least one second item of information on the location zone of said at least one mobile terminal of the second user and at least one second alias datum determined from a user identifier linked to the mobile terminal (1.2) of the second user;
- depending on said second item of location information obtained, and on the list of services, means for determining at least one second available communications service, linked to at least one geographic availability zone in which the mobile terminal (1.2) of the second user is located; and
- means for selecting an identical service for the mobile terminal of the first user from among the first available communication services and for **said at least one** mobile terminal of the second user from among the second available communication services, and linking, via the platform (2), depending on said first alias datum and on **said at least one** second alias datum, the mobile terminal (1.1) of the first user and the at least one mobile terminal of the second user (1.2) for which said service has been selected, via said server of the provider of the selected communication service (3a, 3b, 3c).
